# EUROPEAN PATENT APPLICATION

(11) **EP 2 479 910 A2**
(43) Date of publication of application: **25.07.2012**
(21) Application number: 10834800.4
(22) Date of filing: 03.12.2010
(51) Int. Cl.: H04J 11/00, H04B 7/26

(54) **METHOD AND APPARATUS FOR EFFICIENT CONTENTION-BASED TRANSMISSION IN A WIRELESS COMMUNICATION SYSTEM**

(30) Priority: 03.12.2009 US 266504 P
(71) Applicant: LG Electronics Inc., Seoul 150-721 (KR)
(72) Inventor: CHUNG, Jae Hoon, Anyang-si Gyeonggi-do 431-080 (KR); MOON, Sung Ho, Anyang-si Gyeonggi-do 431-080 (KR); HAN, Seung Hee, Anyang-si Gyeonggi-do 431-080 (KR); LEE, Moon Il, Anyang-si Gyeonggi-do 431-080 (KR)
(74) Representative: Cabinet Plasseraud
(86) International application number: PCT/KR2010/008642
(87) International publication number: WO 2011/068385

(57) **Abstract**

The present invention relates to a wireless communication system, and more particularly to a method and apparatus for efficient contention-based transmission in a wireless communication system. The method for performing contention-based transmission in a wireless communication system according to one embodiment of the present invention comprises: setting a radio resource control (RRC) connection with a receiver end where the contention-based transmission is received; setting a resource area for the contention-based transmission to allow a collision with other transmission; and transmitting at least one of the data and control information on the resource area, wherein the resource area for the contention-based transmission can be hopped on a physical resource.

## Description

### TECHNICAL FIELD

The following description relates to a wireless communication system, and more particularly, to an efficient contention-based transmission method and apparatus in a wireless communication system.

### BACKGROUND ART

A 3rd Generation Partnership Project (3GPP) Long Term Evolution (LTE) system or a 3GPP LTE-Advanced (LTE-A) system which is an evolved version of the 3GPP LTE system basically supports Base Station (BS) scheduling-based uplink (UL) transmission. A detailed description of the scheduling-based UL transmission is as follows. A UL transmission entity (a User Equipment (UE) or a Relay Node (RN)) may perform an initial access process through a cell search and a random access procedure to configure a Radio Resource Control (RRC) connection. To receive scheduling of transmission resources from a BS scheduler in an RRC connected state, the UL transmission entity may transmit a Scheduling Request (SR) including a Buffer Status Reporting (BSR) through a transmission resource of a Physical Uplink Control Channel (PUCCH) format 1 which has been previously RRC configured. Upon receiving the SR, the BS scheduler may transmit a Physical Downlink Control Channel (PDCCH) including a UL grant to the UL transmission entity. The UL transmission entity may transmit UL data and/or control information, based on a UL transmission resource and a transmission scheme assigned/configured through the UL grant received from the BS. Thus, since distinguishable UL resources are scheduled to a plurality of UEs under the overall management of the scheduler, it may be considered that collision between UL transmissions from the plurality of UEs does not occur.

Meanwhile, as a method for reducing complexity or latency in a process until the UL transmission entity receives UL scheduling from the BS and transmitting UL data faster, contention-based UL transmission may be considered. Contention-based UL transmission refers to a scheme which is capable of transmitting UL data and/or control information while stochastically permitting collision between UL transmission entities on physical transmission resources, without depending on BS scheduling. The contention-based UL transmission scheme may be generally applied when there is a large number of UL transmission entities but a small amount of UL transmission traffic from the respective UL transmission entities. For example, it may be assumed that less UL data and/or control information is transmitted from the respective UL transmission entities or there is a small number of occurrences of UL transmission. In this case, overhead, such as SR to the BS or scheduling allocation from the BS, may waste resources. Accordingly, the contention-based UL transmission scheme is advantageous in circumstances in which fast UL transmission is needed without scheduling while partially permitting collision.

Similarly, even in downlink (DL) transmission, contention-based downlink transmission may be performed when a small amount of information is transmitted to a plurality of UEs. Furthermore, the contention-based transmission scheme may be performed along with the above-described scheduling-based transmission scheme.

### DETAILED DESCRIPTION OF THE INVENTION

### Technical Problems

When both a BS scheduling-based transmission scheme and a contention-based transmission scheme are used, a method for efficiently multiplexing the two different UL transmission schemes is needed. Such a multiplexing method includes the configuration of resource regions in which the respective transmission schemes are performed and includes signaling therefor. It is a technical object of the present invention to provide a method and apparatus for efficiently performing the BS scheduling-based transmission scheme and the contention-based transmission scheme.

It will be appreciated by persons skilled in the art that that the technical objects that can be achieved through the present invention are not limited to what has been particularly described hereinabove and other technical objects of the present invention will be more clearly understood from the following detailed description.

### Technical Solutions

To achieve the above technical object, a method for performing contention-based transmission in a wireless communication system according to an embodiment of the present invention includes configuring a Radio Resource Control (RRC) connection with a receiver for receiving the contention-based transmission; determining a resource region for the contention-based transmission which permits collision with other transmission; and transmitting at least one of data and control information on the resource region, wherein the resource region for the contention-based transmission is hopped on a physical resource.

The physical resource may be at least one of a time resource, a frequency resource, a code resource, and a spatial resource.

The resource region for the contention-based transmission may be multiplexed in the physical resource by applying at least one of a Time Division Multiplexing (TDM) scheme and a Frequency Division Multiplexing (FDM) scheme.

The resource region for the contention-based transmission may be defined as a predetermined resource region or may be determined based on signaling from a cell.

The resource region for the contention-based transmission may be configured as a resource region which distinguishes from or overlaps with a resource region for scheduling-based transmission.

The resource region for the contention-based transmission may be configured as a contiguous or non-contiguous resource region.

A hopping granularity of the resource region for the contention-based transmission in the physical resource may be defined as a granularity less than one subframe in a time resource.

The contention-based transmission may be transiently performed before scheduling-based transmission is performed.

Retransmission of the contention-based transmission may be transmitted at a timing when an offset is applied based on a retransmission timing according to a synchronous Hybrid Automatic Repeat Request (HARQ) Round Trip Time (RTT).

A cyclic shift index of a demodulation reference signal for the contention-based transmission may be determined from an index of the physical resource.

A transmission parameter for the contention-based transmission may use a fixed value.

The contention-based transmission in multi-antenna transmission may be performed by a random beamforming scheme.

The contention-based transmission in multi-carrier transmission may trigger carrier activation.

To achieve the above technical object, a user equipment for performing contention-based transmission in a wireless communication system according to another embodiment of the present invention includes a reception module for receiving downlink signals from a base station; a transmission module for transmitting uplink signals to the base station; and a processor for controlling the user equipment including the reception module and the transmission module, wherein the processor is configured to configure a Radio Resource Control (RRC) connection with the base station receiving the contention-based transmission, determine a resource region for the contention-based transmission which permits collision with other transmission and transmit at least one of uplink data and control information in the resource region, and wherein the resource region for the contention-based transmission is hopped in a physical resource.

To achieve the above technical object, a base station for performing contention-based transmission in a wireless communication system according to still another embodiment of the present invention includes a reception module for receiving uplink signals from one or more user equipments; a transmission module for transmitting downlink signals to the one or more user equipments; and a processor for controlling the base station including the reception module and the transmission module, wherein the processor is configured to configure a Radio Resource Control (RRC) connection with the one or more user equipments receiving the contention-based transmission, determine a resource region for the contention-based transmission which permits collision with other transmission, and transmit at least one of downlink data and control information in the resource region, and wherein the resource region for the contention-based transmission is hopped in a physical resource.

The above-described general description of the present invention and a detailed description thereof which will be described are exemplary and are for additional description for invention disclosed in claims.

### Advantageous Effects

According to the present invention, a method and apparatus for efficiently performing a BS scheduling-based transmission scheme and a contention-based transmission scheme are provided. Also, a contention-based transmission method and apparatus for maximally reducing the impact of collision between contention-based transmission schemes or between a contention-based transmission scheme and a scheduling-based transmission scheme are provided. Further, detailed methods which can efficiently perform a contention-based transmission scheme in multi-antenna transmission or multi-carrier transmission.

It will be appreciated by persons skilled in the art that that the effects that can be achieved through the present invention are not limited to what has been particularly described hereinabove and other advantages of the present invention will be more clearly understood from the following detailed description.

### BRIEF DESCRIPTION OF THE DRAWINGS

The accompanying drawings, which are included to provide a further understanding of the invention, illustrate embodiments of the invention and together with the description serve to explain the principle of the invention.

Fig. 1 is a diagram showing the structure of a radio frame used in a 3GPP LTE system.

Fig. 2 is a diagram showing a resource grid in a DL slot.

Fig. 3 is a diagram showing the structure of a DL subframe.

Fig. 4 is a diagram showing the structure of a UL subframe.

Fig. 5 is a diagram showing the structure of a transmitter according to an SC-FDMA scheme

Fig. 6 is a diagram explaining a mapping scheme of signals generated from the DFT module of Fig. 5 in the frequency domain.

Fig. 7 is a block diagram explaining transmission processing of a Demodulation Reference Signal (DMRS) according to an SC-FDMA scheme.

Fig. 8 is a diagram showing a symbol location in which a Reference Signal (RS) is mapped in a subframe structure according to an SC-FDMA scheme.

Fig. 9 is a diagram explaining a clustered DFT-s-OFDMA scheme on a single carrier system.

Fig. 10 to Fig. 12 diagrams explaining a clustered DFT-s-OFDMA scheme on a multi-carrier system.

Fig. 13 is a diagram explaining the structure of a physical layer (L1) and a MAC layer (L2) of a multi-carrier support system.

Fig. 14 is a diagram explaining an example for configuring a transmission resource region for a contention-based transmission scheme through an FDM scheme.

Fig. 15 is a diagram explaining an example for configuring a transmission resource region for a contention-based transmission scheme through a TDM scheme.

Fig. 16 is a diagram explaining an example for configuring a transmission resource region for a contention-based transmission scheme through an FDM/TDM scheme.

Fig. 17 is a diagram showing an example for separately allocating a contention-based transmission resource region from a scheduling-based transmission resource region through an FDM scheme.

Fig. 18 is a diagram showing an example in which a contention-based transmission resource region is distributively allocated with a frequency granularity.

Fig. 19 is a diagram showing an example in which a contention-based transmission resource region is changed according to time in configuring the transmission resource region of an FDM scheme.

Fig. 20 is a diagram explaining a hopping method in a time/frequency domain for a contention-based transmission resource region configuration.

Fig. 21 is a diagram explaining a contention-based transmission method according to an embodiment of the present invention.

Fig. 22 is a diagram showing the configuration of an exemplary embodiment of a UE, an RN, or an eNB according to the present invention.

### BEST MODE FOR CARRYING OUT THE INVENTION

The following embodiments are achieved by combination of structural elements and features of the present invention in a predetermined manner. Each of the structural elements or features should be considered selectively unless specified otherwise. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment.

In exemplary embodiments of the present invention, a description is given of a data transmission and reception relationship between a base station and a terminal. Here, the base station refers to a terminal node of a network communicating directly with the terminal. In some cases, a specific operation described as being performed by the base station may be performed by an upper node of the base station.

In other words, it is apparent that, in a network comprised of a plurality of network nodes including a base station, various operations performed for communication with a terminal may be performed by the base station, or network nodes other than the base station. The term 'base station' may be replaced with terms such as fixed station, Node B, eNode B (eNB), and Access Point (AP). Also, in the present document, the term 'base station' may be used as a concept including a cell or a sector. The term 'cell' may mean a base station unless specified otherwise. Meanwhile, the term 'relay' may be replaced with the terms Relay Node (RN) and Relay Station (RS). Also, the term 'terminal' may be replaced with terms such as User Equipment (UE), Mobile Station (MS), Mobile Subscriber Station (MSS), and Subscriber Station (SS).

Specific terms disclosed in the present invention are proposed to aid in understanding of the present invention, and the use of these specific terms may be changed to another format within the technical scope or spirit of the present invention.

In some instances, well-known structures and devices may be omitted in order to avoid obscuring the concepts of the present invention and the important functions of the structures and devices may be shown in block diagram form. The same reference numbers will be used throughout the drawings to refer to the same or like parts.

Exemplary embodiments of the present invention are supported by standard documents disclosed in at least one of wireless access systems including an Institute of Electrical and Electronics Engineers (IEEE) 802 system, a 3^{rd} Generation Partnership Project (3GPP) system, a 3GPP Long Term Evolution (LTE) system, and a 3GPP2 system. In particular, the steps or parts, which are not described to clearly reveal the technical idea of the present invention, in the embodiments of the present invention may be supported by the above documents. All terminology used herein may be supported by the above-mentioned documents.

The following technique can be used for a variety of radio access systems, for example, Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), and the like. CDMA may be embodied through radio technology such as Universal Terrestrial Radio Access (UTRA) or CDMA2000. TDMA may be embodied through radio technology such as Global System for Mobile communications (GSM)/General Packet Radio Service (GPRS)/Enhanced Data Rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802-20, and E-UTRA (Evolved UTRA). UTRA is a part of the Universal Mobile Telecommunications System (UMTS). 3GPP LTE is a part of E-UMTS (Evolved UMTS), which uses E-UTRA. 3GPP LTE employs OFDMA in DL and employs SC-FDMA in UL. LTE-A is an evolved version of 3GPP LTE. WiMAX can be explained by IEEE 802.16e (WirelessMAN-OFDMA Reference System) and advanced IEEE 802.16m (WirelessMAN-OFDMA Advanced System). For clarity, the following description focuses on the 3GPP LTE and LTE-A systems. However, technical features of the present invention are not limited thereto.

In the following description, although a BS (or a cell) is mainly described as an example of a DL transmission entity and a UE is mainly described as an example of a UL transmission entity, the present invention is not limited thereto. Namely, an RN may be a DL transmission entity to the UE or a UL reception entity from the UE or may be a UL transmission entity to the BS or a DL reception entity from the BS. Even in such a case, disclosure of the present invention may be identically applied.

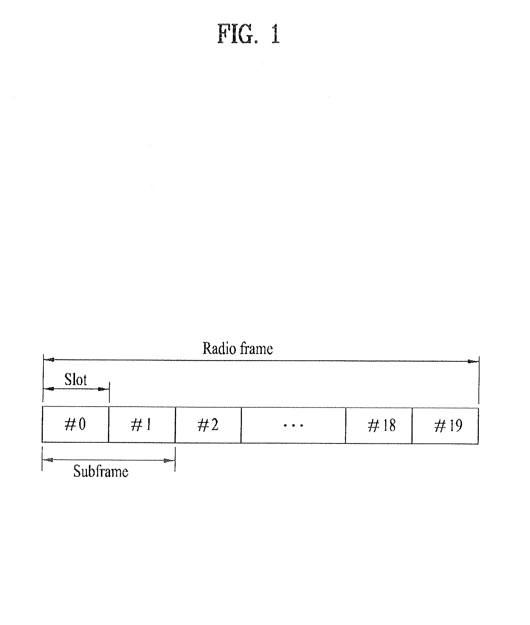

Fig. 1 is a diagram showing the structure of a radio frame used in a 3GPP LTE system. One radio frame includes 10 subframes, and one subframe includes two slots in the time domain. A time required for transmitting one subframe is defined as a Transmission Time Interval (TTI). For example, one subframe may have a length of 1 ms and one slot may have a length of 0.5 ms. One slot may include a plurality of OFDM symbols in the time domain. Since the 3GPP LTE system uses an OFDMA scheme in DL, the OFDM symbol indicates one symbol period. One symbol may be called an SC-FDMA symbol or a symbol period in UL. A Resource Block (RB) is a resource allocation unit and includes a plurality of contiguous subcarriers in one slot. The structure of the radio frame is only exemplary. Accordingly, the number of subframes included in one radio frame, the number of slots included in one subframe or the number of OFDM symbols included in one slot may be changed in various manners.

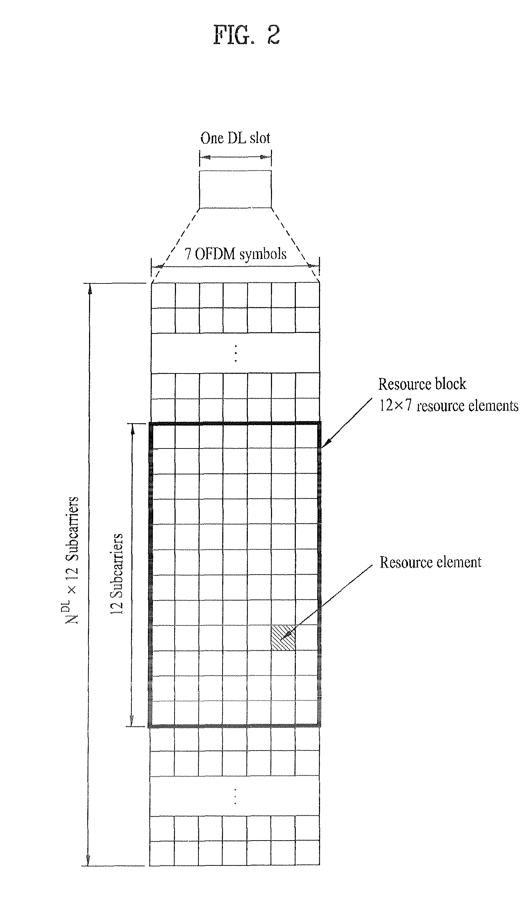

Fig. 2 is a diagram showing a resource grid in a DL slot. Although one DL slot includes 7 OFDM symbols in the time domain and one RB includes 12 subcarriers in the frequency domain in the figure, the present invention is not limited thereto. For example, in case of a normal Cyclic Prefix (CP), one slot includes 7 OFDM symbols. However, in case of an extended CP, one slot may include 6 OFDM symbols. Each element on the resource grid is referred to as a Resource Element (RE). One RB includes 12x7 REs. The number N^{DL} of RBs included in the DL slot is determined based on a DL transmission bandwidth. The structure of a UL slot may be equal to the structure of the DL slot.

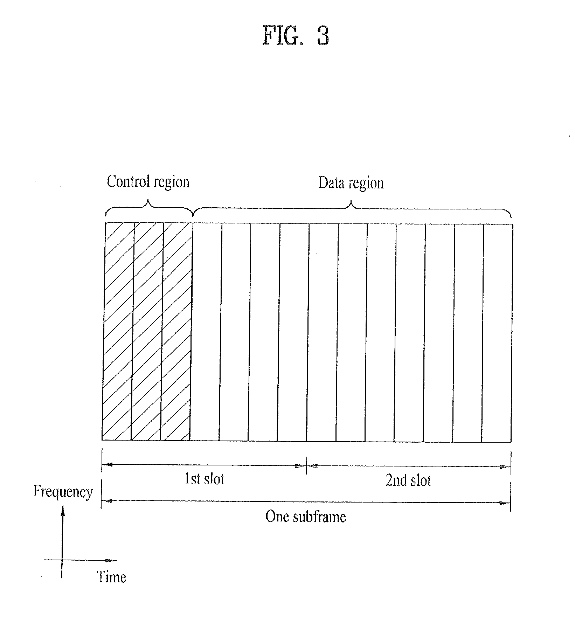

Fig. 3 is a diagram showing the structure of a DL subframe. A maximum of three OFDM symbols of a front portion of a first slot within one subframe corresponds to a control region to which a control channel is allocated. The remaining OFDM symbols correspond to a data region to which a Physical Downlink Shared Channel (PDSCH) is allocated. Examples of the DL control channels used in the 3GPP LTE system include, for example, a Physical Control Format Indicator Channel (PCFICH), a Physical Downlink Control Channel (PDCCH), a Physical Hybrid automatic repeat request Indicator Channel (PHICH), etc. The PCFICH is transmitted at a first OFDM symbol of a subframe, and includes information about the number of OFDM symbols used to transmit the control channel in the subframe. The PHICH includes a HARQ ACK/NACK signal as a response to UL transmission. Control information transmitted through the PDCCH is referred to as Downlink Control Information (DCI). The DCI includes UL or DL scheduling information or a UL transmit power control command for a certain UE group. The PDCCH may include resource allocation and transmission format of a Downlink Shared Channel (DL-SCH), resource allocation information of an Uplink Shared Channel (UL-SCH), paging information of a Paging Channel (PCH), system information on the DL-SCH, resource allocation of a higher layer control message such as a random access response transmitted on the PDSCH, a set of transmit power control commands for individual UEs in a certain UE group, transmit power control information, activation of Voice over IP (VoIP), etc. A plurality of PDCCHs may be transmitted within the control region. The UE may monitor the plurality of PDCCHs. The PDCCHs are transmitted on an aggregate of one or more consecutive Control Channel Elements (CCEs). The CCE is a logical allocation unit used to provide the PDCCHs at a coding rate based on the state of a radio channel. The CCE corresponds to a plurality of RE groups. The format of the PDCCH and the number of available bits are determined based on a correlation between the number of CCEs and the coding rate provided by the CCEs. A BS determines a PDCCH format according to a DCI transmitted to a UE, and attaches a Cyclic Redundancy Check (CRC) to control information. The CRC is masked with a Radio Network Temporary Identifier (RNTI) according to an owner or usage of the PDCCH. If the PDCCH is for a specific UE, a cell-RNTI (C-RNTI) of the UE may be masked to the CRC. Alternatively, if the PDCCH is for a paging message, a paging indicator identifier (P-RNTI) may be masked to the CRC. If the PDCCH is for system information (more specifically, a System Information Block (SIB)), a system information identifier and a System Information RNTI (SI-RNTI) may be masked to the CRC. To indicate a random access response that is a response to transmission of a random access preamble of the UE, a Random Access-RNTI (RA-RNTI) may be masked to the CRC.

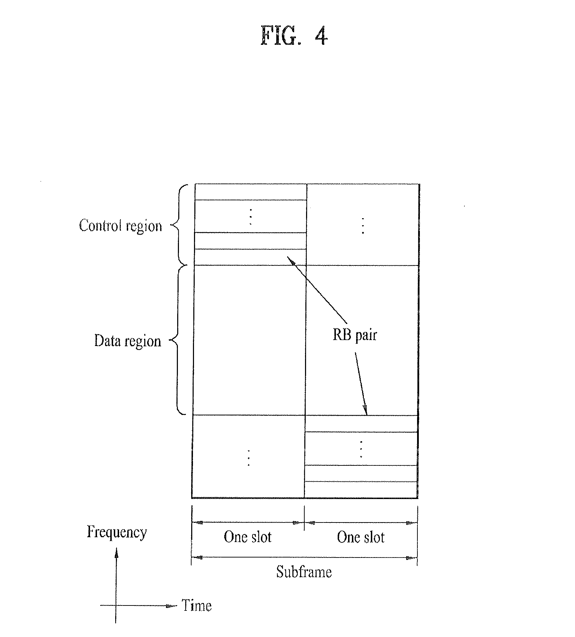

Fig. 4 is a diagram showing the structure of a UL subframe. The UL subframe may be divided into a control region and a data region in the frequency domain. A Physical Uplink Control Channel (PUCCH) including UL control information is allocated to the control region. A Physical uplink Shared Channel (PUSCH) including user data is allocated to the data region. In order to maintain single carrier properties, one UE does not simultaneously transmit the PUCCH and the PUSCH. The PUCCH for one UE is allocated to a RB pair in a subframe. RBs belonging to the RB pair occupy different subcarriers with respect to two slots. This is said that an RB pair allocated to the PUCCH is frequency-hopped at a slot boundary.

Physical Uplink Control Channel (PUCCH)

Hereinafter, a Physical Uplink Control Channel (PUCCH) including UL control information will be described in detail. For details of the PUCCH except for the following description, reference may be made to a standard document (e.g. 3GPP TS36.211).

The PUCCH may be modulated using a Binary Phase Shift Keying (BPSK) and a Quadrature Phase Shift Keying (QPSK) scheme. Control information of a plurality of UEs may be transmitted through the PUCCH. If Code Division Multiplexing (CDM) is performed to distinguish between signals of the respective UEs, a length-12 Constant Amplitude Zero Autocorrelation (CAZAC) sequence is mainly used. Since the CAZAC sequence has a property of maintaining a constant amplitude in the time domain and frequency domain, it is suitable for increasing coverage by lowering a Peak-to-Average Power Ratio (PAPR) or Cubic Metric (CM). ACK/NACK information about DL data transmission, transmitted through the PUCCH, is covered using an orthogonal sequence.

Control information transmitted over the PUCCH may be distinguished from each other using cyclically shifted sequences having different cyclic shift values. The cyclically shifted sequence may be generated by cyclically shifting a base sequence by a specific Cyclic Shift (CS) amount. The specific CS amount is indicated by a CS index. The number of available cyclic shifts may vary according to delay spread of a channel. A variety of types of sequences may be used as the base sequence and the above-mentioned CAZAC sequence is an example of the base sequence.

The PUCCH may include control information such as Scheduling Request (SR), DL channel measurement information, and ACK/NACK information about DL data transmission. The channel measurement information may include a Channel Quality Indicator (CQI), a Precoding Matrix Index (PMI), and a Rank Indicator (RI).

A PUCCH format is defined according to a type of control information included in the PUCCH, a modulation scheme, etc. In more detail, PUCCH format 1 is used to transmit the SR and PUCCH format 1a or format 1b is used to transmit the HARQ ACK/NACK. PUCCH format 2 is used to transmit the CQI and PUCCH format 2a/2b is used to transmit the CQI and HARQ ACK/NACK.

In any subframe, if the HARQ ACK/NACK is transmitted alone, PUCCH format 1a or format 1b is used, and if the SR is transmitted alone, PUCCH format 1 is used. The UE may transmit the HARQ ACK/NACK and the SR in the same subframe.

The PUCCH format may be summarized as shown in Table 1.

**[Table 1]**

| PUCCH format | Modulation scheme | Number of bits per subframe | Usage | Etc. |
|---|---|---|---|---|
| 1 | N/A | N/A | SR (Scheduling Request) | |
| 1a | BPSK | 1 | ACK/NACK | One codeword |
| 1b | QPSK | 2 | ACK/NACK | Two codewords |
| 2 | QPSK | 20 | CQI | Joint coding ACK/NACK (extended CP) |
| 2a | QPSK+BPSK | 21 | CQI+ACK/NAC K | Normal CP only |
| 2b | QPSK+BPSK | 22 | CQI+ACK/NAC K | Normal CP only |

As indicated in Fig. 4, the PUCCH is mapped to both edges of a UL frequency block. A CQI may be mapped to a physical resource block immediately after a frequency band edge, and ACK/NACK may be mapped to the next position.

UL multiple access scheme

UL multiple access schemes will be described hereinbelow.

First, an SC-FDMA transmission scheme will now be described. SC-FDMA is also called DFT-s-OFDMA and is different from cluster type DFT-s-OFDMA which will be described later on. SC-FDMA is a transmission scheme which can maintain a PAPR or CM at a low value and is a transmission scheme for efficient transmission by avoiding a non-linear distortion interval of a power amplifier. The PAPR is a parameter showing a waveform property and is obtained by dividing a peak value of an amplitude of a waveform by a time averaged Root Mean Square (RMS). The CM is another measurement value capable of representing a numeral denoted by the PAPR. The PAPR is associated with a dynamic range which should be supported by the power amplifier in a transmitter. Namely, to support a transmission scheme having a high PAPR value, a dynamic range (linear interval) of the power amplifier needs to be wide. As the dynamic range of the power amplifier is wider, since the cost of the power amplifier is increased, the transmission scheme in which the PAPR is maintained at a low value is favorable for UL transmission. Accordingly, SC-FDMA which can maintain the PAPR at a low value is used as a UL transmission scheme of a current 3GPP LTE system.

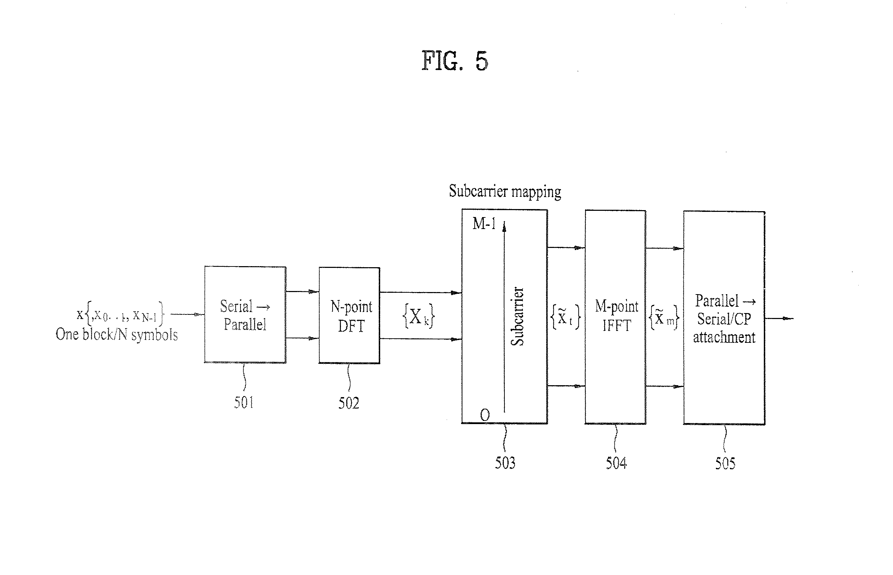

Fig. 5 is a diagram showing the structure of a transmitter according to an SC-FDMA scheme.

One block including N symbols supplied to the transmitter is converted into parallel signals through a serial-to-parallel converter 501. The parallel signals are dispersed through an N-point DFT module 502 and the dispersed signals are mapped in the frequency domain by a subcarrier mapping module 503. Signals on subcarriers are linear combinations of the N symbols. The signals mapped in the frequency domain are converted into time domain signals through an M-point IFFT module 504. The time domain signals are converted into serial signals through a parallel-to-serial converter 505 and a CP is attached to the serial signals. The influence of IFFT processing of the M-point IFFT module 404 is partially offset by DFT processing of the N-point DFT module 502. Although the signals supplied to the DFT module 502 have a low PAPR, the DFT processed signals have a high PAPR and the signals generated by IFFT processing of the IFFT module 504 may have a low PAPR.

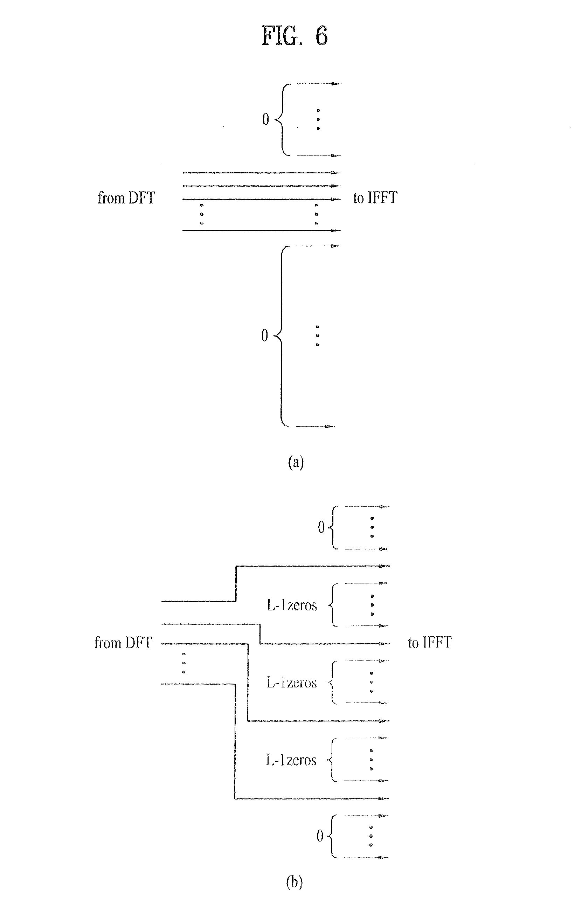

Fig. 6 is a diagram explaining a mapping scheme of the signals generated from the DFT module 502 in the frequency domain. A signal generated from the SC-FDMA transmitter can satisfy a single carrier property by performing one of the two schemes shown in Fig. 6. Fig. 6(a) shows a localized mapping scheme in which the signals generated from the DFT module 502 are mapped only to a specific part of subcarrier areas. Fig. 6(b) shows a distributed mapping scheme in which the signals generated from the DFT modules 502 are distributively mapped to a whole subcarrier area. In the legacy 3GPP LTE standard (e.g. release 8), the localized mapping scheme is used.

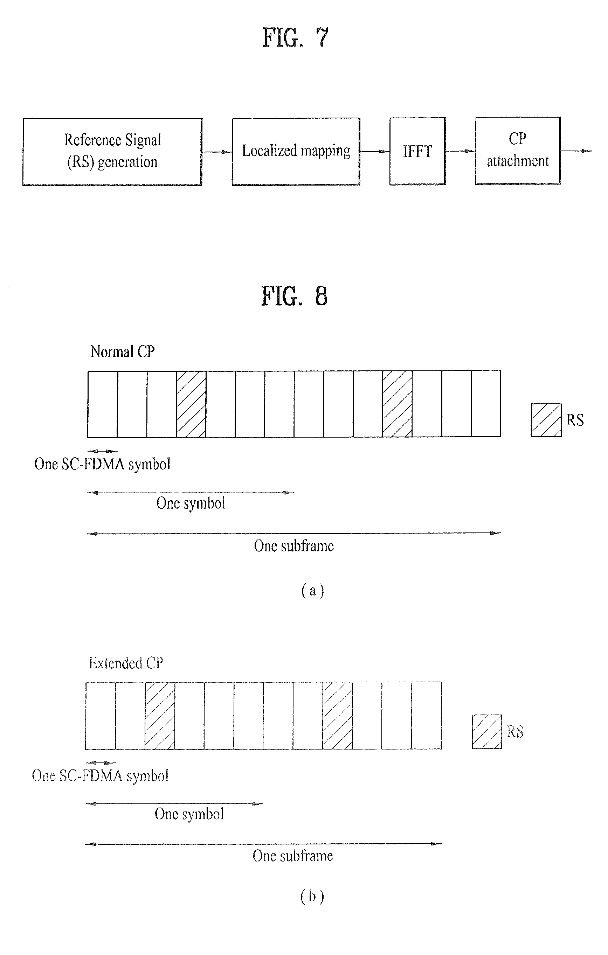

Fig. 7 is a block diagram explaining transmission processing of a Demodulation Reference Signal (DMRS) for demodulating a transmission signal according to an SC-FDMA scheme. According to definition in the legacy 3GPP LTE standard (e.g. release 8), although a data part is transmitted such that signals generated in the time domain are converted into frequency domain signals through DFT processing, are mapped onto subcarriers, and then are IFFT processed (refer to Fig. 5), the DMRS is directly generated (701) in the frequency domain by omitting DFT processing, mapped (702) on subcarriers, IFFT processed (703), and CP attached.

Fig. 8 is a diagram showing a symbol location in which a Reference Signal (RS) is mapped in a subframe structure according to an SC-FDMA scheme. In Fig. 8(a), in case of a normal CP, the RS is located in the fourth SC-FDMA symbol of each of two slots in one subframe. In Fig. 8(b) in case of an extended CP, the RS is located in the third SC-FDMA symbol of each of two slots in one subframe.

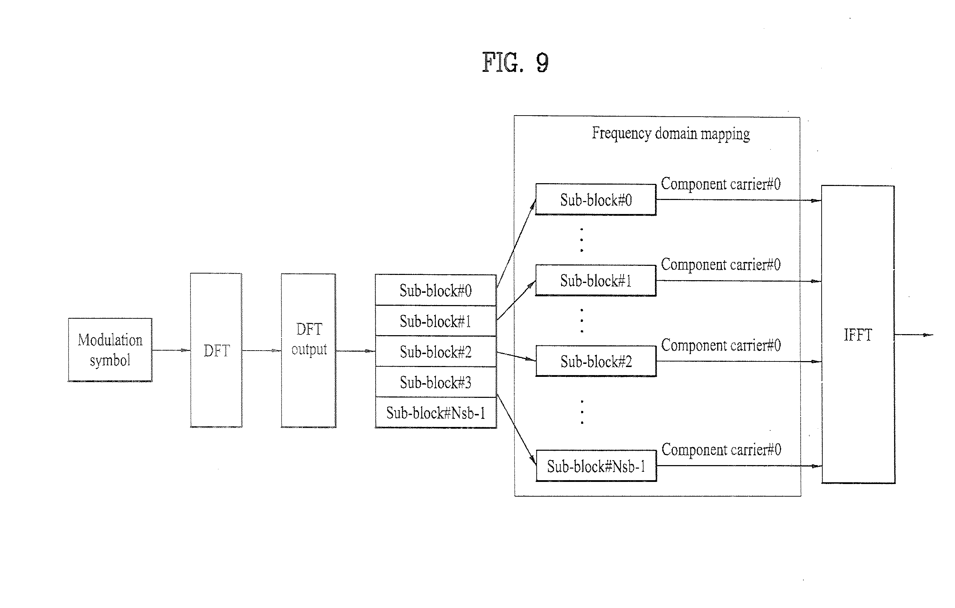

A clustered DFT-s-OFDMA scheme is described with reference to Fig. 9 to Fig. 12. The clustered DFT-s-OFDMA scheme is a modification of the above-described SC-FDMA and refers to a scheme in which DFT processed signals are divided into a plurality of sub-blocks and the sub-blocks are mapped to separate locations in the frequency domain.

Fig. 9 is a diagram explaining a clustered DFT-s-OFDMA scheme on a single carrier. For example, a DFT output may be divided into Nsb sub-blocks (sub-block#0 to sub-block#Nsb-1). In mapping the sub-blocks in the frequency domain, sub-block#0 to sub-block#Nsb-1 are all mapped to one carrier (e.g. a carrier of a 20MHz bandwidth) and each of the sub-blocks may be mapped to separate locations in the frequency domain. Alternatively, each of the sub-blocks may be locally mapped in the frequency domain.

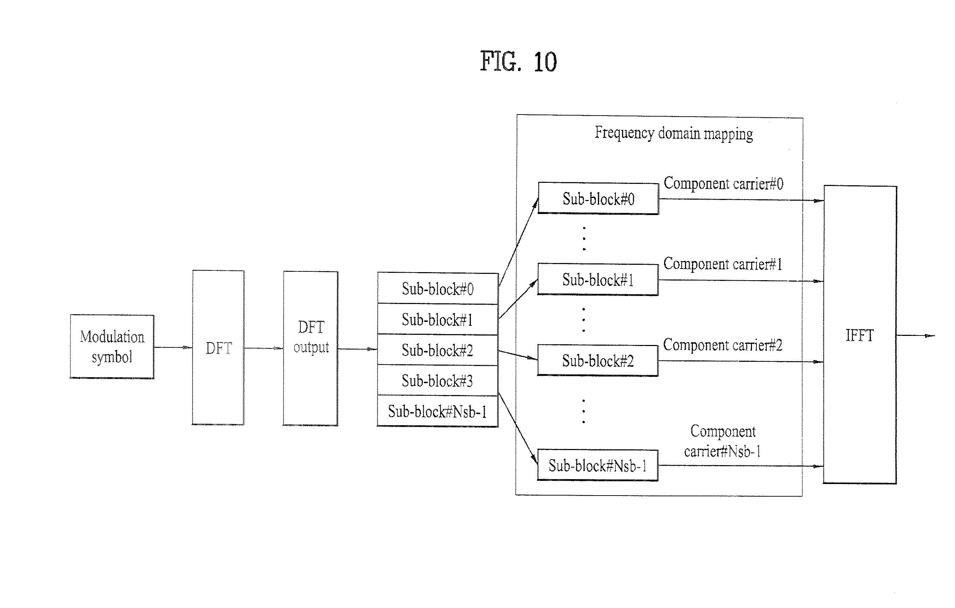

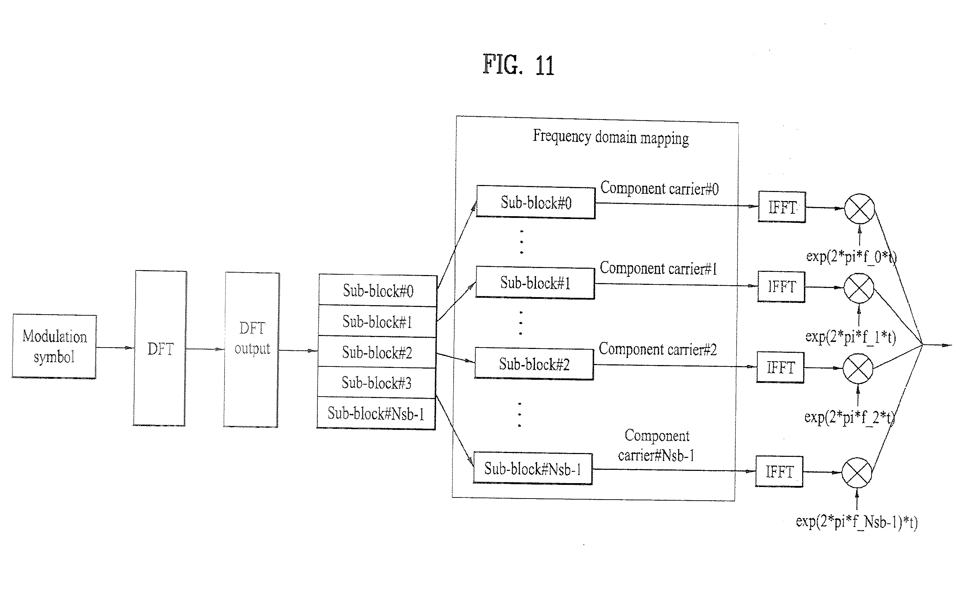

Fig. 10 and Fig. 11 are diagrams explaining a clustered DFT-s-OFDMA scheme on multiple carriers.

Fig. 10 shows an example in which signals can be generated through one IFFT module when subcarrier intervals are aligned between contiguous carriers in contiguously configured multiple carriers (i.e. in a situation where frequency bands of multiple carriers are contiguously allocated). For example, a DFT output may be divided into Nsb sub-blocks (sub-block#0 to sub-block#Nsb-1). In mapping the sub-blocks in the frequency domain, sub-block#0 to sub-block#Nsb-1 are respectively mapped to component carrier#0 to component carrier#Nsb-1 (each component carrier may have a bandwidth of 20MHz). Also, each of the sub-blocks may be locally mapped in the frequency domain. The sub-blocks mapped to the respective component carriers may be converted into time domain signals through one IFFT module.

Fig. 11 shows an example in which signals are generated through a plurality of IFFT modules when multiple carriers are non-contiguously configured (i.e. in a situation where frequency bands of multiple carriers are non-contiguously allocated). For example, a DFT output may be divided into Nsb sub-blocks (sub-block#0 to sub-block#Nsb-1). In mapping the sub-blocks in the frequency domain, sub-block#0 to sub-block#Nsb-1 are respectively mapped to component carrier#0 to component carrier#Nsb-1 (each component carrier may have a bandwidth of 20MHz). Also, each of the sub-blocks may be locally mapped in the frequency domain. The sub-blocks mapped to the respective component carriers may be converted into time domain signals through the respective IFFT modules.

If the clustered DFT-s-OFDMA scheme on a single carrier described with reference to Fig. 9 is inter-carrier DFT-s-OFDMA, the clustered DFT-s-OFDMA scheme on multiple carriers described with reference to Fig. 10 and Fig. 11 may be called inter-carrier DFT-s-OFDMA. Intra-carrier DFT-s-OFDMA and inter-carrier DFT-s-OFDMA may be interchangeably used.

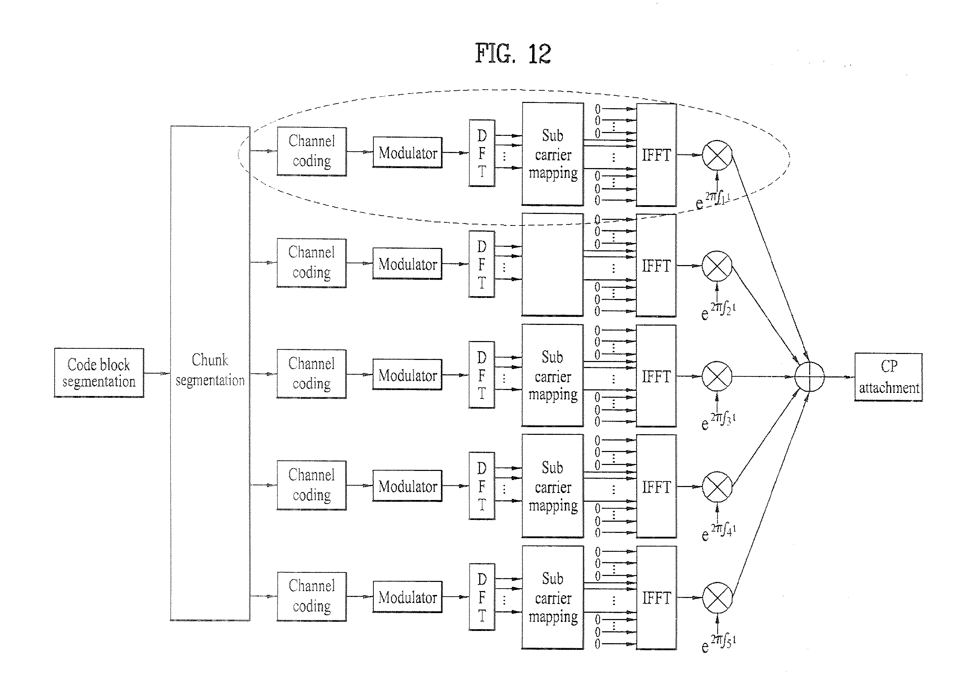

Fig. 12 is a diagram explaining a chunk-specific DFT-s-OFDMA for performing DFT processing, frequency domain mapping, and IFFT processing in a chunk unit. Chunk-specific DFT-s-OFDMA may be called Nx SC-FDMA. A code block segmentation signal is chunk segmented, channel coded and modulated. The modulated signal is subj ected to DFT processing, mapped in the frequency domain, and IFFT processed in the same manner as in the description of Fig. 5. Outputs from IFFT are summed and a CP may be attached thereto. The Nx SC-FDMA scheme described in Fig. 12 may be applied to both concatenated multiple carriers or non-concatenated multiple carriers.

Carrier aggregation technology

Hereinafter, Carrier Aggregation (CA) technology will be described. CA (also called bandwidth aggregation or spectrum aggregation) technology is to efficiently use a fragmented narrowband and to produce an effect as if a broadband is logically used by physically aggregating a plurality of bands in the frequency domain.

CA has been introduced to support increased throughput, prevent cost increase caused by introduction of a broadband Radio Frequency (RF) element, and guarantee compatibility with a conventional system. A legacy wireless communication system (e.g. a system according to LTE release 8 or 9 standard) supports transmission and reception on a single carrier defined as a specific bandwidth, whereas CA technology enables data exchange between a UE and a BS through plural aggregates of carriers of a bandwidth unit defined in the legacy wireless communication system. Here, a carrier of a bandwidth unit defined in the legacy wireless communication system may be called a Component Carrier (CC). For example, CA technology may include technology supporting a system bandwidth of up to 100 MHz by aggregating a maximum of 5 CCS even if one CC supports a bandwidth of 5MHz, 10MHz, or 20MHz.

DL CA may be described as DL transmission support of a BS to a UE using a frequency domain resource (subcarriers or Physical Resource Blocks (PRBs)) on one or more carrier bands in any time domain resource (a subframe unit). Similarly, UL CA may be described as UL transmission support of the UE to the BS using a frequency domain resource (subcarriers or PRBs) on one or more carrier bands in any time domain resource (a subframe unit).

A downlink component carrier may be expressed as a DL CC and an uplink component carrier may be expressed as a UL CC. A carrier or component carrier may be expressed as a cell according to a scheme explained and expressed in terms of a function configuration in 3GPP standard. Then a DL CC and a UL CC may be expressed as a DL cell and a UL cell, respectively. In the present invention, a plurality of carriers to which CA is applied is expressed using the terms carrier, component carrier, CC, or cell.

Among DL and UL CCs configured for any UE for a series of specific purposes, there may be a Primary CC (PCC), a Primary cell (P-cell), or an anchor CC (or anchor cell). As an example, a DL PCC (or DL P-cell) may be configured to transmit configuration/re-configuration information always in an RRC connection state. As another example, a UL PCC (or UL P-cell) may be configured for any UE to transmit a PUCCH for Uplink Control Information (UCI). Basically, one DL PCC (P-cell) and one UL PCC (P-cell) may be UE-specifically configured. Alternatively, if a great many CCs are configured for the UE or in a situation where CCs can be configured from a plurality of BSs, one or plural DL PCCs (P-Cells) and/or UL PCCs (P-cells) may be configured for any UE from one or more BSs. A method through which the BS randomly configures a linkage of the DL PCC (P-cell) and the UL PCC (P-cell) UE-specifically may be considered. As another simplified method, a linkage of the DL PCC (P-cell) and the UL PCC (P-cell) may be configured based on a basic linkage relationship signaled to System Information Block (or Base) (SIB) 2 predefined in LTE release-8 (Rel-8). The DL PCC (P-cell) and the UL PCC (P-cell) of a UE-specific linkage configuration may be expressed as a P-cell.

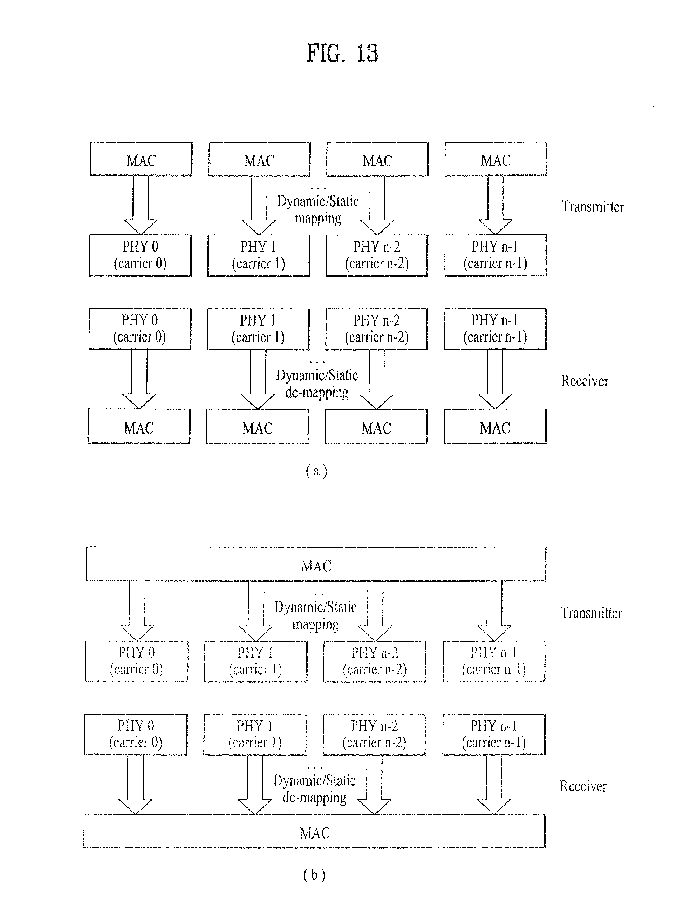

With reference to Fig. 13, the structure of a physical layer (first layer, L1) and a MAC layer (second layer, L2) of a multi-carrier support system is described. In a BS of a legacy wireless communication system supporting a single carrier, one physical layer (PHY) entity supporting one carrier may be included and one Medium Access Control (MAC) entity for controlling one PHY entity may be provided. A baseband processing operation, for example, may be performed in the PHY. In the MAC layer, for example, an L1/L2 scheduler operation including a MAC protocol Data Unit (PDU) generator and a MAC/RLC sublayer of a transmitter may be performed. A MAC PDU packet block of the MAC layer is converted into a transport block through a logical transport layer and is mapped to a PHY input information block.

Meanwhile, in a multi-carrier support system, a plurality of MAC-PHY entities may be provided. Namely, as shown in Fig. 13(a), a transmitter and a receiver of the multi-carrier support system may be configured such that each of n CCs corresponds to one MAC-PHY entity. Since an independent PHY and MAC layer per CC are configured, a PDSCH per CC is generated in the PHY from the MAC PDU.

In the multi-carrier support system, one common MAC entity and a plurality of PHY entities may be provided. Namely, as shown in Fig. 13(b), the transmitter and receiver of the multi-carrier support system may be configured such that n PHY entities corresponding respectively to n CCs are provided and one common MAC entity for controlling the n PHY entities is provided. In this case, a MAC PDU derived from one MAC layer may be divided into a plurality of transport blocks corresponding respectively to a plurality of CCs on a transport layer. Alternatively, the MAC PDU may be divided into CCs during MAC PDU generation in the MAC layer or RLC PDU generation in the RLC layer. Thus, a PDSCH per CC is generated in the PHY.

A PDCCH which transmits control information of L1/L2 control signaling generated from a packet scheduler of the MAC layer may be mapped to a physical resource per individual CC and then transmitted. Here, the PDCCH including control information (DL allocation or UL grant) for PDSCH or PUSCH transmission for a specific UE may be separately encoded with respect to each CC through which corresponding PDSCH/PUSCH is transmitted. Such a PDCCH may be called a separate coded PDCCH. Meanwhile, control information for PDSCH/PUSCH transmission of plural CCs may be configured by one PDCCH and then transmitted, and such a PDCCH may be called joint coded PDCCH.

To support CA, a connection between a BS and a UE (or RN) should be configured or preparation for a connection configuration is needed, so as to transmit the control channel (PDCCH or PUCCH) and/or the shared channel (PDSCH or PUSCH). For such a connection/connection configuration for a specific UE (or RN), measurement and/or reporting for carriers are needed and CCs for such measurement and/or reporting may be assigned. That is, CC assignment refers to configuring CCs (the number of CCs and index designation) used for DL/UL transmission among DL/UL CCS configured in the BS in consideration of capabilities of a specific UE (or RN) and a system environment.

When third layer (L3) Radio Resource Management (RRM) controls CC assignment, UE-specific or RN-specific RRC signaling may be used. Alternatively, cell-specific or cell cluster-specific RRC signaling may be used. When dynamic control is necessary for CC assignment, a predetermined PDCCH may be used as L1/L2 control signaling, or a CC assignment control information dedicated physical control channel or a PDSCH of an L2 MAC message type may be used. Meanwhile, when a packet scheduler controls CC assignment, a predetermined PDCCH may be used as L1/L2 control signaling, or a CC assignment control information dedicated physical control channel or a PDSCH of an L2 MAC message type may be used.

In an advanced OFDM or OFDMA based cellular mobile communication system, a contention-based UL transmission scheme may be used in addition to a scheduling-based UL transmission scheme. The scheduling-based UL transmission scheme refers to a scheme in which a UL transmission resource and a transmission scheme are allocated through DL control information signaling by using conventional radio channel dependent scheduling and a UL transmission entity transmits UL data and/or control information according thereto. Meanwhile, a transmission scheme which permits contention or collision in a transmission resource configuration, with the purpose of efficiently reducing overhead for transmission of a small packet size or performing UL transmission with less latency, may be defined as the contention-based UL transmission scheme.

The contention-based transmission scheme is different from a random access procedure for initial access of a UE to a cell, because it means a scheme for transmitting random data and/or control information without scheduling of the cell under the state that an RRC connection is configured between the cell and the UE (i.e. after an initial state), UL and/or DL synchronization necessary to perform basic transmission is established, or cell/UE information and basic transmission parameters are exchanged. The contention-based transmission scheme is also different from a general Multi User-MIMO (MU-MIMO) transmission scheme which allocates the same time/frequency resource to multiple users but uses spatially distinguishable resources (i.e. basically, collision does not occur). Candidate technology of the contention-based transmission scheme includes a scheme for performing transmission without considering transmission of other users while permitting collision and a scheme for performing transmission when it is judged that there is no transmission of other users through a process of sensing transmission of other users.

The present invention proposes detailed methods for supporting efficient multiplexing between the scheduling-based transmission scheme and the contention-based transmission scheme when the two schemes co-exist, as a UL transmission scheme in a random OFDM or OFDMA based cellular mobile communication system. The present invention also proposes detailed methods for supporting efficient transmission of the contention-based UL transmission scheme.

In the present invention, the term cell is defined as including the concept of a cell defined in the legacy 3GPP LTE system standard and including an RN as a DL (access DL between an RN and a UE) transmission entity (or a UL (access UL) reception entity). The tem UE is defined as including the concept of a UE defined in the legacy 3GPP LTE system standard and including an RN as a DL (backhaul DL between a BS and an RN) reception entity (or a UL (backhaul UL) transmission entity).

In addition, UL transmission described in the present invention may be data transmission or control information transmission or may be transmission over a random Physical Uplink Shared Channel (PUSCH) or a Physical Uplink Control Channel (PUCCH) in terms of a UL physical channel.

Implementation 1

The present mode relates to a resource region configuration for a contention-based transmission scheme and a signaling method therefor.

In a circumstance in which a scheduling-based UL transmission scheme is considered as a main transmission scheme in any OFDM based cellular mobile communication system, a contention-based UL transmission scheme may be additionally applied. In this case, it is necessary to efficiently configure a time-frequency domain resource region for the contention-based UL transmission scheme in order to prevent degradation of transmission quality of the scheduling-based UL transmission scheme. The following embodiments can be considered as a detailed method for configuring a UL resource region for the contention-based UL transmission scheme (hereinafter referred to as a contention-based transmission resource region).

Embodiment 1

The present embodiment relates to a method for configuring a UL resource region for the contention-based UL transmission scheme through a Frequency Division Multiplexing (FDM) scheme.

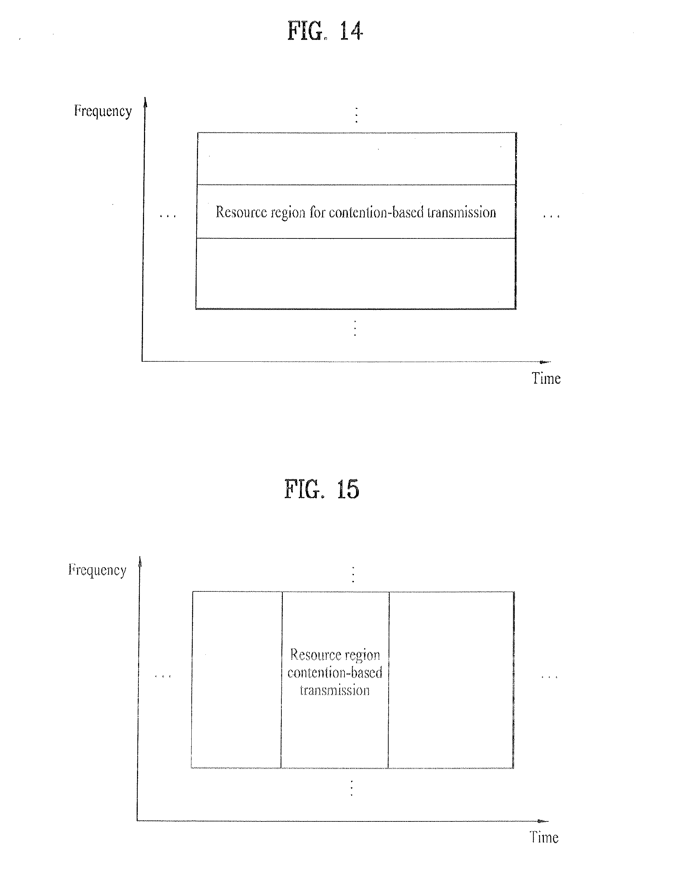

Fig. 14 is a diagram explaining an example for configuring a transmission resource region for a contention-based transmission scheme through an FDM scheme.

The contention-based transmission resource region according to the present embodiment may be statically or persistently configured in a specific frequency region of an entire transmission time duration system or cell-wise. The contention-based transmission resource region may be initiated or released at an arbitrary time through cell-specific broadcast signaling, i.e. through system information, RRC higher layer signaling, or L1/L2 control signaling (e.g. PDCCH). Additionally, location or size in a frequency resource region of the contention-based transmission resource region may vary through cell-specific signaling.

If the contention-based transmission resource region is configured in the unit of a UE or in the unit of a UE group including a predetermined number of UEs, the contention-based transmission resource region may be initiated or released at an arbitrary time through specific signaling of a UE or UE group unit, i.e. UE-specific or UE group-specific RRC higher layer signaling, or L1/L2 control signaling (e.g. PDCCH). Additionally, location or size in a frequency resource region of the contention-based transmission resource region may vary through UE-specific (or UE group-specific) signaling.

Although configuration of one contention-based transmission resource region in an entire system bandwidth may be basically considered, a plurality of distinguishable contention-based transmission resource regions may be configured according to usage and situation. The entire system bandwidth may be defined as a bandwidth including a plurality of carriers which is configured through UL CA. A plurality of distinguishable contention-based transmission resource regions may be configured in the unit of a UL CC. When a plurality of UL CCs is configured, a UL CC in which a single contention-based transmission resource region is configured may be determined as a UL Primary CC (PCC) (P-cell) or a UL anchor CC or may be determined as a specific UL CC through cell-specific or UE-specific signaling (e.g. RRC signaling or L1/L2 control signaling). As an embodiment for configuring multiple contention-based transmission resource regions within a unit UL CC, two contention-based transmission resource regions may be configured by setting specific frequency resource regions of both band edges as contention-based transmission resource regions in the other transmission resource regions except for a frequency resource configured for UL PUCCH transmission.

Embodiment 2

The present embodiment relates to a method for configuring a UL resource region for the contention-based UL transmission scheme through a Time Division Multiplexing (TDM) scheme.

Fig. 15 is a diagram explaining an example for configuring a transmission resource region for a contention-based transmission scheme through a TDM scheme.

The contention-based transmission resource region according to the present embodiment may be configured to an entire frequency resource region of a statically or persistently configured time domain resource region system or cell-wise. The contention-based transmission resource region may be initiated or released at an arbitrary time through cell-specifically broadcast signaling, i.e. system information, RRC higher layer signaling, or L1/L2 control signaling (e.g. PDCCH). Additionally, location or size in the time domain of the contention-based transmission resource region may vary through cell-specific signaling.

If the contention-based transmission resource region is configured in the unit of a UE or in the unit of UE groups, the contention-based transmission resource region may be initiated or released at an arbitrary time through specific signaling of a UE or UE group unit, i. e. UE-specific (or UE group-specific) RRC higher layer signaling, or L1/L2 control signaling (e.g. PDCCH). Additionally, Location or size in the time domain of the contention-based transmission resource region may vary through UE-specific (or UE group-specific) signaling.

Subframes which can perform contention-based UL transmission may be configured as a period of an integer multiple of more than one of a random time resource region, for example, a 10ms radio frame in an entire system transmission time duration. A cell may signal the configuration of the subframes for contention-based transmission to UEs which perform contention-based UL transmission. Such signaling may be cell-specifically or UE-specifically (or UE group-specifically) performed through RRC higher layer signaling or L1/L2 control signaling. Alternatively, a period and start offset (i.e. start position) of contention-based transmission may be configured as a 1ms subframe and the cell may inform UEs which perform contention-based transmission of the subframe level (through, for example, cell-specific or UE-specific (or UE group-specific) RRC higher layer signaling or L1/L2 control signaling). As one embodiment, 10-bit or 40-bit bitmap configuration control information may be defined. As another method, when retransmission is applied according to HARQ in contention-based UL transmission, a period of contention-based transmission subframes may be designated as 8ms or an integer multiple of 8ms in the state that an arbitrary start offset is configured.

The entire system bandwidth may be defined as a bandwidth including a plurality of carriers which is configured through UL CA and may be defined as a frequency bandwidth region of one or more UL CCs. Moreover, a plurality of distinguishable contention-based transmission resource regions may be configured in the unit of a UL CC. When a plurality ofUL CCs is configured, a UL CC in which a contention-based transmission resource region is configured may be determined as a UL Primary CC (PCC) (P-cell) or a UL anchor CC or may be determined as a specific UL CC through cell-specific or UE-specific signaling (e.g. RRC signaling or L1/L2 control signaling).

Embodiment 3

The present embodiment relates to a method for configuring a UL resource region for the contention-based UL transmission scheme through an FDM/TDM scheme.

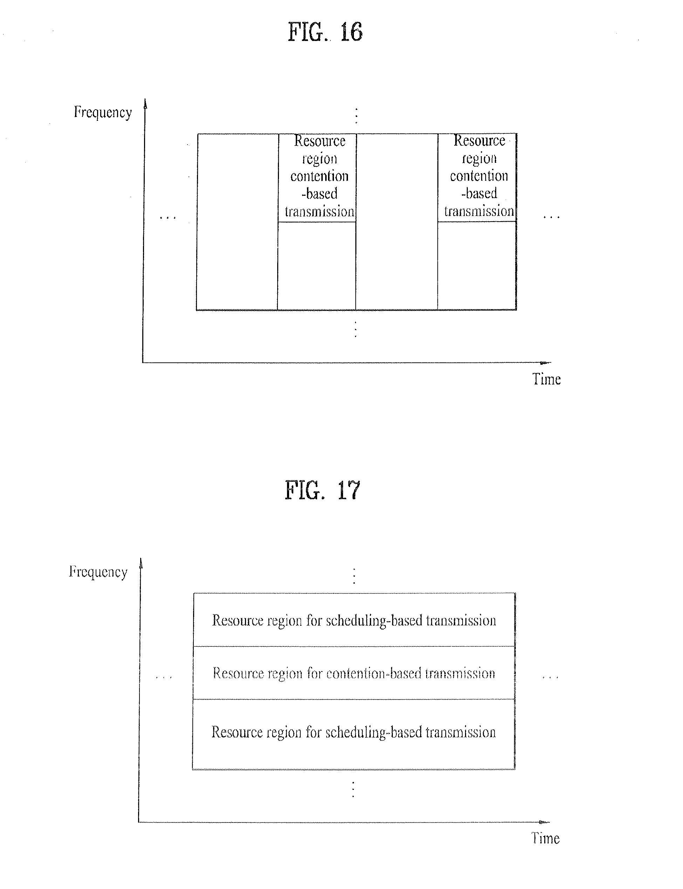

Fig. 16 is a diagram explaining an example for configuring a transmission resource region for a contention-based transmission scheme through an FDM/TDM scheme. Although a contention-based transmission resource region is configured in the same frequency region according to a time duration in Fig. 16, the present invention is not limited thereto. For example, the contention-based transmission resource region may be configured in different frequency regions according to an arbitrarily defined time duration unit or a distinguishably defined time duration. The location and/or size in the frequency domain of the contention-based transmission resource region configured in a specific time duration may be determined according to a predetermined rule or pattern. Such a rule or pattern may be determined according to, for example, a cyclic shift scheme having a prescribed offset.

Configuration of the contention-based transmission resource region in accordance with the present embodiment is separately described in terms of a time resource region configuration and a frequency resource region configuration.

First, in terms of a time resource region configuration, the contention-based transmission resource region may be configured as an entire frequency resource region of a statically or persistently configured time domain resource region system or cell-wise. The contention-based transmission resource region may be initiated or released at an arbitrary time through cell-specific broadcast signaling, i.e. system information, RRC higher layer signaling, or L1/L2 control signaling (e.g. PDCCH). Additionally, location or size in the time domain of the contention-based transmission resource region may vary through cell-specific signaling.

If the contention-based transmission resource region is configured in the unit of a UE or in the unit of UE groups, the contention-based transmission resource region may be initiated or released at an arbitrary time through specific signaling of a UE or UE group unit, i.e. UE-specific (or UE group-specific) RRC higher layer signaling, or L1/L2 control signaling (e.g. PDCCH). Additionally, location or size in the time domain of the contention-based transmission resource region may vary through UE-specific (or UE group-specific) signaling.

Meanwhile, in terms of a frequency resource region configuration, the contention-based transmission resource region may be statically or persistently configured in a specific frequency region of all transmission time durations system or cell-wise. The contention-based transmission resource region may be initiated or released at an arbitrary time through cell-specific broadcast signaling, i.e. through system information, RRC higher layer signaling, or L1/L2 control signaling (e.g. PDCCH). Additionally, location or size in a frequency resource region of the contention-based transmission resource region may vary through cell-specific signaling.

If the contention-based transmission resource region is configured in the unit of a UE or in the unit of a UE group including a predetermined number of UEs, the contention-based transmission resource region may be initiated or released at an arbitrary time through specific signaling of a UE or UE group unit, i.e. UE-specific or UE group-specific RRC higher layer signaling, or L1/L2 control signaling (e.g. PDCCH). Additionally, location or size in a frequency resource region of the contention-based transmission resource region may vary through UE-specific (or UE group-specific) signaling.

As a signaling method for the time resource region configuration and the frequency resource region configuration, the same signaling method with respect to UE-specific, UE group-specific, or cell-specific signaling may be basically considered and the same signaling method with respect to RRC higher layer signaling or L1/L2 control signaling may be considered. Alternatively, different signaling methods may be applied to the time resource configuration and frequency resource configuration, in order to support a dynamic resource configuration for either the time resource configuration or the frequency resource configuration. For example, the time domain transmission resource region may be statically or semi-statically configured and the frequency domain transmission resource region may be dynamically configured. Alternatively, the time domain transmission resource region may be dynamically configured and the frequency domain transmission resource region may be statically or semi-statically configured. As another example, the time domain transmission resource region may be cell-specifically configured and the frequency domain transmission resource region may be UE-specifically (or UE group-specifically) configured.

Subframes which can perform contention-based UL transmission may be configured as a period of an integer multiple of more than one of a random time resource region, for example, a 10ms radio frame in an entire system transmission time duration. A cell may signal the configuration of the subframes for contention-based transmission to UEs which perform contention-based UL transmission. Such signaling may be cell-specifically or UE-specifically (or UE group-specifically) performed through RRC higher layer signaling or L1/L2 control signaling. Alternatively, a period and start offset (i.e. start position) of contention-based transmission may be configured as a 1ms subframe level and the cell may inform UEs which perform contention-based transmission of the subframe level (through, for example, cell-specific or UE-specific (or UE group-specific) RRC higher layer signaling or L1/L2 control signaling). As one embodiment, 10-bit or 40-bit bitmap configuration control information may be defined. As another method, when retransmission is applied according to HARQ in contention-based UL transmission, a period of contention-based transmission subframes may be designated as 8ms or an integer multiple of 8ms in the state that an arbitrary start offset is configured.

Although configuration of one contention-based transmission resource region in an entire system bandwidth may be basically considered, a plurality of distinguishable contention-based transmission resource regions may be configured according to usage and situation. The entire system bandwidth may be defined as a bandwidth including a plurality of carriers which is configured through UL CA. A plurality of distinguishable contention-based transmission resource regions may be configured in the unit of a UL CC. When a plurality of UL CCs is configured, a UL CC in which a single contention-based transmission resource region is configured may be determined as a UL Primary CC (PCC) (P-cell) or a UL anchor CC or may be determined as a specific UL CC through cell-specific or UE-specific signaling (e.g. RRC signaling or L1/L2 control signaling). As an embodiment for configuring multiple contention-based transmission resource regions within a unit UL CC, two contention-based transmission resource regions may be configured by setting specific frequency resource regions of both band edges as contention-based transmission resource regions in the other transmission resource regions except for a frequency resource configured for UL PUCCH transmission.

In the above-described Embodiments 1 to 3 (i.e., contention-based transmission resource region configuration of an FDM scheme, a TDM scheme, and an FDM/TDM scheme), the present invention proposes that granularity of a resource configuration for time and frequency resource regions be defined as follows.

The time domain resource for contention-based transmission may be allocated in the unit of a 10ms radio frame or an integer multiple thereof (e.g. 10ms, 20ms, 30ms, 40ms,...) or may be allocated in the unit of a 1ms subframe or an integer multiple thereof (e.g. 1ms, 2ms, 3ms, 4ms,...), in a 3GPP LTE or 3GPP LTE-A system. In terms of a specific time resource configuration, the time resource region for contention-based transmission may be allocated in the unit of a 0.5ms slot, an integer multiple thereof, an OFDM symbol (or SC-FDMA symbol), or an integer multiple thereof.

A frequency domain resource for contention-based transmission may be basically allocated in the unit of a 12-subcarrier Physical Resource Block (PRB) or an integer multiple thereof (e.g. one PRB, two PRBs,...). In terms of a specific frequency resource configuration, the frequency domain resource region for contention-based transmission may be allocated in the unit of a subcarrier or an integer multiple thereof (e.g. one subcarrier, two subcarriers, or three subcarriers).

In the above-described Embodiments 1 to 3 (i.e. contention-based transmission resource region configuration using the FDM scheme, TDM scheme, and FDM/TDM scheme) of the present invention, the contention-based transmission resource region is basically configured by Radio Resource Management (RRM) functionality and may be cell-specifically or UE-specifically configured through RRC signaling. To flexibly apply the resource configuration of the TDM, FDM, and FDM/TDM schemes, it is proposed to independently define an RRC parameter for a time resource configuration and an RRC parameter for a frequency resource configuration.

Implementation 2

The present mode relates to a method for defining resource allocation of a contention-based transmission resource region in terms of mutual relationship with resource allocation of a UL resource region for a scheduling-based UL transmission scheme (hereinafter, referred to as a scheduling-based transmission resource region).

Embodiment 1

The present embodiment is to provide a method for separately allocating the contention-based transmission resource region to a resource region which distinguishes from the scheduling-based transmission resource region. According to the present embodiment, the contention-based transmission resource region may be allocated to a contiguous or non-contiguous resource region.

The contention-based UL transmission scheme attempts transmission while basically permitting collision in transmission resources during transmission between UEs, whereas collision is not basically permitted in transmission of UL data and/or control information through the scheduling-based UL transmission scheme. Accordingly, the present invention proposes a method for distinguishably configuring the contention-based transmission resource region and the scheduling-based transmission resource region to prevent degradation of reception quality of a BS caused by collision in a scheduling-based transmission resource region. It is therefore possible not to generate transmission resource collision in the scheduling-based transmission resource region.

Fig. 17 is a diagram showing an example for separately allocating a contention-based transmission resource region from a scheduling-based transmission resource region through an FDM scheme. Referring to Fig. 17, the contention-based transmission resource region and the scheduling-based transmission resource region may be distinguishably allocated to frequency regions which do not overlap.

Although Fig. 17 shows exemplary transmission resource allocation of an FDM scheme, the present invention is not limited thereto and the same principle may be applied even to transmission resource allocation of a TDM or FDM/TDM scheme. In other words, even in allocation through the TDM or FDM/TDM scheme, the contention-based transmission resource region may be allocated to a resource region which distinguishes from and does not overlap with the scheduling-based transmission resource region.

Moreover, the contention-based transmission resource region configuration method of the TDM, FDM, or FDM/TDM scheme and the signaling method therefor, which have been described in Implementation 1, may be identically applied to the present embodiment. Therefore, when a plurality of contention-based transmission resource regions are separately configured, the contention-based transmission resource regions may be non-contiguously configured.

In the present embodiment, it may be considered that the configuration of the scheduling-based transmission resource region is signaled by defining an explicit RRC parameter as the concept of a given resource region. However, since, in the scheduling-based transmission scheme, UL transmission is performed in a resource scheduled by a cell scheduler, the scheduler may schedule the scheduling-based transmission resource region by avoiding the contention-based transmission resource region instead of defining an additional scheduling-based transmission resource region configuration. That is, since resource allocation is not additionally signaled to a UE, there is no difference in terms of the UE compared with reception of a conventional scheduling-based transmission resource region. To perform such a scheme, it may be considered that the scheduler has collision avoidance capability.

Embodiment 2

The present embodiment relates to a method for allocating the contention-based transmission resource region to a resource region overlapping with the scheduling-based transmission resource region. According to the present embodiment, the contention-based transmission resource region may be allocated to a contiguous or non-contiguous resource region.

In addition to occurrence of collision in a transmission resource between contention-based UL transmissions, collision may occur between contention-based UL transmission and scheduling-based UL transmission. This is because it is difficult for the scheduler to substantially predict contention-based transmission of UEs when a resource region for scheduling-based UL transmission separate from a resource region for contention-based UL transmission is not additionally defined. Namely, this may mean that the scheduler does not consider the contention-based transmission resource region in allocating the scheduling-based transmission resource region. The present invention proposes a method for efficiently allocating the contention-based transmission resource region in such a circumstance (e.g. to mitigate collision between contention-based transmission and scheduling-based transmission).

The details proposed in the above-described Implementation 1 may be identically applied to a detailed method for cell-specifically or UE-specifically (or UE group-specifically) configuring the contention-based transmission resource region through RRC higher layer signaling or L1/L2 control signaling in this embodiment.

When collision occurs between contention-based UL transmission and scheduling-based UL transmission in addition to occurrence of collision between contention-based UL transmissions, the following methods may be additionally considered so that collision does not concentrate in a specific scheduling-based UL transmission channel in terms of a resource configuration.

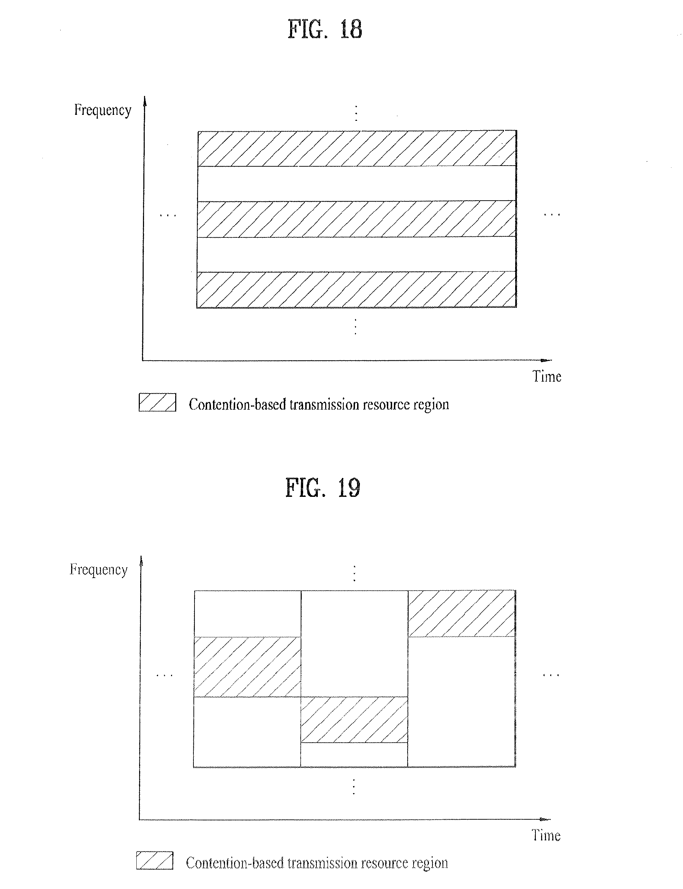

First, a method is proposed for configuring a distributed transmission resource region with a predetermined frequency granularity in an entire frequency region with respect to a contention-based transmission resource region configuration of the FDM or FDM/TDM scheme. The predetermined frequency granularity may be defined as the unit of a PRB (i.e. 12 carriers), an integer multiple of the PRB, a subcarrier, or an integer multiple of the subcarrier. If the contention-based transmission resource region is distributed in a frequency domain with a more precise granularity, the impact of collision can be further mitigated. Accordingly, the impact of collision caused by contention-based transmission for a scheduling-based UL transmission channel which receives one or more PRBs for transmission can be mitigated. Fig. 18 is a diagram showing an example in which a contention-based transmission resource region is distributively allocated with a frequency granularity.

Next, a method is proposed for changing the location and size of a transmission resource region with a predetermined time granularity with respect to a contention-based transmission resource region configuration of the FDM or FDM/TDM scheme. The predetermined time granularity may be defined in the unit of a subframe, an integer multiple of the subframe, a radio frame, or an integer multiple of the radio frame. Alternatively, the location and size of the contention-based transmission resource region may be changed in the unit of a slot, an integer multiple of the slot, an OFDM symbol (or SC-FDMA symbol), or an integer multiple of the OFDM symbol (or SC-FDMA symbol), in addition to or separately from the above predetermined time granularity. If the contention-based transmission region is changed in a time domain with a more precise granularity, the impact of collision may be further mitigated. Fig. 19 is a diagram showing an example in which a contention-based transmission resource region is changed according to time in configuring the transmission resource region of an FDM scheme. As shown in Fig. 19, the contention-based transmission resource region may be allocated with different frequency locations and sizes in an arbitrary time granularity.

The contention-based transmission resource region in an arbitrary time granularity may be distributively configured with a predetermined frequency granularity in an entire frequency domain as described above.

In the above-described method for distributing/changing allocation of the contention-based transmission resource region in the frequency domain and time domain, related information (i.e. triggering/release of resource region allocation change, a change period and offset (or start point), implicit or explicit information about a change pattern) may be signaled to UEs performing contention-based transmission cell-specifically or UE-specifically (or UE group-specifically) through RRC higher layer signaling or L1/L2 control signaling.

If a PDCCH is used as L1/L2 control signaling, a new DCI format (i.e. DCI payload design) capable of indicating change of the contention-based transmission resource region, triggering/release of the change of the contention-based transmission resource region, and related detailed configuration information may be defined. Moreover, in order to prevent blind decoding overhead of the UE from increasing according to the additional definition of the DCI format, a flag or indicator for contention-based transmission resource region configuration, which has the same payload size as another DCI format (an existing DCI format or a newly defined DCI format), may be added to a DCI payload or may be defined as an additional encoding bit. Such a DCI format may be any DCI format of a UE-common DCI format or a UE-specific DCI format.

Meanwhile, change of a contention-based transmission resource region configuration in the time/frequency domain may be achieved by a shifting or hopping operation. That is, the contention-based transmission resource region is configured to be shifted in a given resource with a predefined granularity, and a shifted granularity value or a start offset may be specified in a cell unit or a UE (or a UE group) unit, thereby relieving the impact of collision. A higher collision mitigation effect can be expected when allocation of the contention-based transmission resource region is randomized in the time/frequency domain. For randomization capability, a random hopping scheme may be applied through a randomizer. As one method for assigning randomness, a generator for configuring a cell-specific or UE-specific (or UE group-specific) input parameter may be used. The generator may be, for example, a Gold code generator, a Pseudo-Noise (PN) generator, or an m-sequence generator.

The UE-specific contention-based transmission resource region configuration described in this document may indicate UL physical channel transmission resource configuration for a corresponding UE.

Implementation 3

The present mode relates to a transmission resource region configuration and release method associated with a utilization method of a contention-based transmission scheme. Applying the contention-based transmission scheme to a UL transmission scheme may be categorized into the following two cases.

In the first case, any UEs may perform UL contention-based transmission at an arbitrary moment so that the UEs can transmit a short packet with low latency and low overhead irrespective of whether UL scheduling for the UEs is applied.

In the second case, UEs which are newly configured as an active mode may perform UL contention-based transmission without a particularly defined UL scheduling grant before initial UL scheduling is activated.

In the first case, it is demanded that a contention-based transmission resource region be continuously configured and updated and signaling for a resource region configuration be continuously provided to corresponding UEs. Information about the contention-based transmission resource region configuration may be provided through RRC higher layer signaling or L1/L2 control signaling in consideration of whether an update periodicity and signaling of an event-trigger type are applied. If a PDCCH is used as L1/L2 control signaling, a DCI format for the contention-based transmission resource region configuration is newly defined or a dedicated physical control channel for the contention-based transmission resource region configuration, such as a PCFICH or PHICH, may be newly designed. Further, additional signaling for releasing the contention-based transmission resource region may be defined and, to this end, RRC signaling or L1/L2 control signaling may be applied. Especially, if PDCCH based signaling is applied, an additional payload design (i.e. new DCI format) suitable for resource region release may be defined. Even in UEs performing contention-based UL transmission at an arbitrary time, a UE behavior may be defined so as to perform blind decoding for a UL grant PDCCH.

Meanwhile, in the second case, since the contention-based transmission scheme is transiently applied while a UE newly initiates a session, an initiation/release method of the contention-based transmission resource region configuration for supporting the contention-based transmission scheme will be described hereinbelow in detail.

Embodiment 1

The present embodiment relates to a method through which the contention-based transmission resource region is configured and updated through cell-specific or UE-specific (or UE group-specific) broadcast signaling and a UE initiating any UL session transmits data or control information through the contention-based transmission resource region by the contention-based UL transmission scheme without receiving additional signaling.

Embodiment 2

Two methods may be considered to activate or initiate the contention-based UL transmission scheme under a circumstance in which the contention-based transmission resource region for contention-based transmission of a corresponding UE is not particularly configured through signaling.

The first method is to perform a predefined type of contention-based UL transmission in an existing scheduling-based transmission physical resource region without any initial configuration related signaling. The predefined type of contention-based UL transmission means that a physical resource size, a modulation scheme, and an effective code rate for performing contention-based transmission is performed are predefined. At this time, a cell may be configured to always perform reception and detection/decoding functions for such contention-based transmission. The contention-based UL transmission may be configured to be performed always at a previously designated physical resource size and a fixed effective code rate using a fixed modulation scheme, so that the cell can correctly receive and decode contention-based transmission. Moreover, the cell may measure population of all UEs using the contention-based UL transmission scheme and may adjust a transmission Modulation and Coding Scheme (MCS) applied to the scheduling-based UL transmission scheme in consideration of a predicted collision impact. The adjustment of the transmission MCS may include gradually lowering a preset transmission MCS by a prescribed offset.

The second method involves transmitting a prescribed PDCCH for signaling control information for contention-based transmission to a UE group periodically or in an even-triggered form, in preparation of contention-based UL transmission from any UE. The prescribed PDCCH may be masked to a common ID (e.g. UE group C-RNTI) for a UE group. Control information about contention-based transmission physical resource region allocation and a transmission scheme to be used may be defined in payload design until a new PDCCH is received through a DCI format of a corresponding PDCCH. In other words, the UE may receive detailed control information such as a transmission resource region and transmission MCS for contention-based UL transmission from the cell through such a prescribed PDCCH. If a plurality of UL CCs is configured, a carrier indicator field in which contention-based transmission is to be applied may be defined in the PDCCH DCI format. The UE group C-RNTI may preconfigured from the cell through UE-specific (or UE group-specific) RRC signaling.

The following description may be commonly applied to the above Embodiment 1 and Embodiment 2 of the method of applying the contention-based transmission scheme (transiently in the process of newly initiating a session) before the UE initiates scheduling-based transmission.

A UL scheduling request of a corresponding UE may be explicitly included in UL data or control information and may then be transmitted. Alternatively, when a reception cell successfully receives a physical channel transmitted by the contention-based transmission scheme without defining additional information explicitly indicating a scheduling request, it may be configured that the cell implicitly recognizes the physical channel as a UL scheduling request.

A corresponding UE may perform UL transmission according to the contention-based transmission scheme before receiving a UL grant PDCCH from the cell and may apply the scheduling-based UL transmission by naturally releasing the contention-based transmission scheme after successfully receiving the UL grant PUCCH. Timing for releasing the contention-based transmission scheme may be set immediately after the UL grant PDCCH is received. Alternatively, timing for releasing the contention-based transmission scheme may be designated. In this case, a false-positive or false-alarm situation (i.e. a situation in which the UE performs CRC even though there is no PDCCH transmission thereto or a PDCCH is for another UE, detects no error, and as a result, misjudges the PDCCH as belonging thereto) which can be generated during PDCCH blind decoding needs to be considered. In other words, if the UE misjudges that it receives a UL grant PDCCH, a situation in which the contention-based transmission resource is released and scheduling-based transmission cannot be performed should be prevented. The present invention proposes a method through which the UE performs scheduling-based UL transmission upon detecting the UL grant PUCCH, transitions to the scheduling-based UL transmission scheme immediately after receiving ACK through a PHICH and/or a toggled New Data Indicator (NDI) value (the NDI value is changed (i.e. toggled) compared to previous transmission when new UL data transmission rather than UL data retransmission is scheduled) through a UL grant, and continues to perform the contention-based UL transmission scheme when ACK over the PHICH or the toggled NDI value is not received.

A detailed method for transitioning to the scheduling-based UL transmission scheme from the contention-based UL transmission scheme may be applied as a method for transitioning again to the scheduling-based UL transmission scheme when application of the contention-based UL transmission scheme is explicitly or implicitly configured from the cell with respect to not only a UE newly starting a session but also an arbitrary UE.

Embodiment 3

The present embodiment relates to a method for defining mode switching between the contention-based UL transmission scheme and the scheduling-based UL transmission scheme. In order for a scheduler to manage such mode switching, UL data and UL buffer status information needs to be cyclically transmitted from a higher layer or needs to be always multiplexed at a MAC Service Data Unit (SDU) or an RLC SDU level. In addition, the scheduler may apply a method for UE-specific (or UE group-specific) DL control signaling (e.g. RRC higher layer signaling or L1/L2 UL grant PDCCH based signaling) which can indicate scheduling-based UL transmission.

In the methods for applying the contention-based transmission scheme (transiently in the process of newly initiating a session) before the UE initiates scheduling-based transmission, including the above-described Embodiment 1 to Embodiment 3, a method for simultaneously performing Scheduling Request (SR) PUCCH transmission and contention-based PUSCH transmission will now be described in detail.

At this time, in a situation in which a UL SR is demanded, the corresponding UE may transmit UL data based on the contention-based transmission scheme according to the above-described various methods, transmit an SR by applying PUCCH format 1 at a high layer RRC-configured SR transmission time, receive a UL grant PUCCH from the cell, stop or release contention-based UL transmission, and transition to scheduling-based UL transmission. As another method, buffer status information of the corresponding UE may be transmitted through a MAC messaging based PUSCH by excluding SR transmission. In this case, UL transmission resource configuration may be scheduled through RRC higher layer signaling or L1/L2 control signaling (i.e. a UL grant PDCCH).

Timing for stopping or releasing the contention-based transmission scheme may be configured immediately after receiving the UL grant PDCCH. Alternatively, the UE may perform scheduling-based UL transmission upon detecting the UL grant PUCCH, transition to the scheduling-based UL transmission scheme immediately after receiving ACK through a PHICH and/or a toggled NDI value through a UL grant, and continue to perform the contention-based UL transmission scheme when ACK over the PHICH or the toggled NDI value is not received.

Implementation 4

The present embodiment relates to physical channel transmission methods in the contention-based transmission scheme.

The UL physical channel transmission methods may be basically configured according to the various methods (above Implementation 1 and Implementation 2) for mitigating the impact of collision in configuring the contention-based UL transmission resource region proposed in the present invention. The physical channel transmission methods may be easily achieved by applying a symbol-to-PRB mapping process for physic channels for existing UL data or control information transmission.

To effectively mitigate the impact of resource collision between contention-based UL transmissions or between contention-based UL transmission and scheduling-based UL transmission, a method for restoring the impact of resource collision to channel decoding capacity may be considered by changing (shifting or hopping) a contention-based transmission resource region configuration in a specific resource region based on a given transmission resource region configuration and an MCS having sufficient robustness. The present invention proposes the following 4 methods for changing (shifting or hopping) a contention-based transmission resource region configuration with a physical resource region and change granularity.

As the first method, the contention-based transmission resource region configuration may be changed in the unit of a subcarrier, plural subcarrier groups, a PRB (12 subcarriers), or plural PRB groups in a frequency domain.

As the second method, the contention-based transmission resource region configuration may be changed in the unit of an OFDM symbol (or SC-FDMA symbols), plural OFDM symbol groups (or SC-FDMA symbol groups), a slot (0.5 ms), plural slot groups, a subframe (1 ms), or plural subframe groups in a time domain.

As the third method, the contention-based transmission resource region configuration may be changed by applying an orthogonal channelization code, a quasi-orthogonal channelization code, a quasi-orthogonal UE-specific scrambling code, or a non-orthogonal UE-specific scrambling code in a code domain or a power domain.

As the fourth method, the contention-based transmission resource region configuration may be changed by applying Space Division Multiple Access (SDMA) based beamforming in MU-MIMO when any physical resources (e.g. time/frequency domain) are shared in a space domain.

In changing (shifting or hopping) the contention-based transmission resource region configuration in a specific physical resource domain, the impact of collision can be mitigated by specifying a change granularity value or a start offset in a cell unit or a UE (or a UE group) unit. Changing (shifting or hopping) the contention-based transmission resource region configuration in a specific physical resource region may be applied according to a predefined pattern. If allocation of the contention-based transmission resource is more randomized in a specific physical resource region, a higher collision mitigation effect can be expected. To assign randomization capability, a random hopping scheme through a randomizer may be applied. As one method for assigning randomness, a generator for setting a cell-specific or UE-specific (or UE group-specific) input parameter may be used. The generator may be, for example, a Gold code generator, a Pseudo-Noise (PN) generator, or an m-sequence generator.

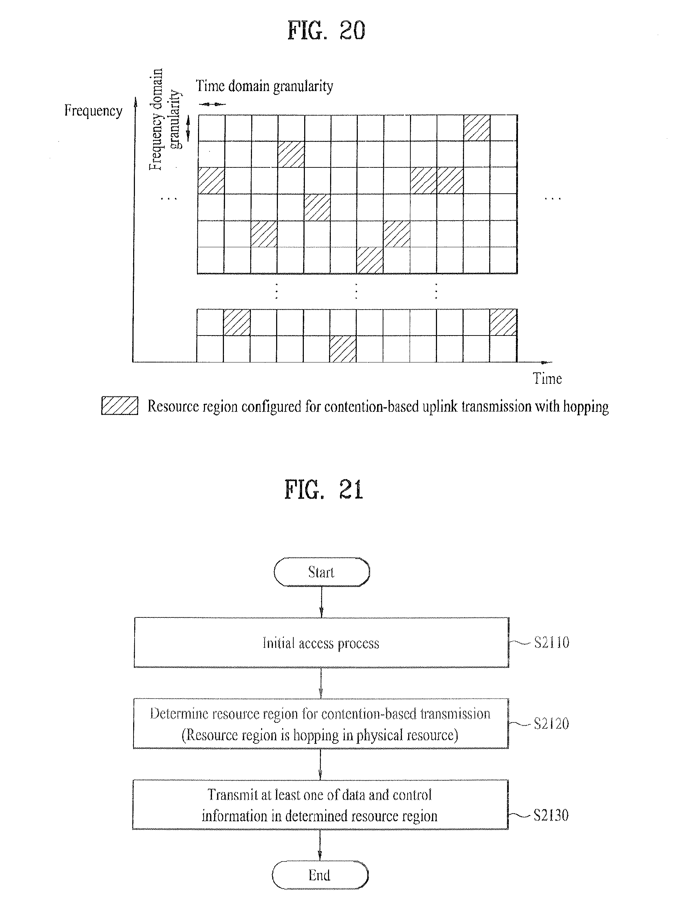

Fig. 20 is a diagram explaining a hopping method in a time/frequency domain for a contention-based transmission resource region configuration. In Fig. 20, the contention-based transmission resource region is configured by the FDM/TDM scheme and is hopped according to a specific granularity on the time/frequency domain. As the time domain granularity and frequency domain granularity to which hopping is applied in Fig. 20, any granularity of the above-mentioned various examples may be used. For example, S (S≥1) time domain granularities may be configured to constitute one subframe or a plurality of subframes, and T (T≥1) frequency domain granularities may be configured to constitute one PRB or a plurality of PRBs.

For instance, when contention-based transmission resource hopping is applied in the time domain, if the contention-based transmission resource is hopped in a smaller unit (slot unit or symbol unit) than one TTI unit (i.e. subframe unit), the impact of collision can be further reduced. Assuming that the contention-based transmission resource is allocated in the unit of one subframe, since one subframe, i.e. one TTI is a channel encoding unit, collision may occur in the whole channel encoding unit. Then, there may be the case where a receiver cannot decode UL transmission. On the other hand, when the contention-based transmission resource region is allocated in a symbol unit, since collision may occur only a part of a channel encoding unit, the receiver can increase a decoding probability by raising a transmission power or lowering an MCS.

Implementation 5

The present mode relates to a HARQ feedback information (ACK/NACK) transmission and UL retransmission method for contention-based UL transmission.

A HARQ operation will now be described in brief. A UE which has transmitted UL data waits for HARQ feedback information through a PHICH from a cell. If the HARQ feedback information from the cell is NACK, the UE retransmits the previously transmitted data at a retransmission TTI and if the HARQ feedback information from the cell is ACK, the UE stops retransmitting the previously transmitted data. The retransmission TTI may be configured after 8 or 10 subframes starting from a previous transmission time. If the number of times of retransmission reaches a maximum transmission number configured by a higher layer, the UE no longer performs retransmission.

The HARQ operation for contention-based UL transmission may be applied. Basically, an implicit resource allocation scheme having the lowest index of a PRB and a CS index of a UL DMRS according to an existing scheme (scheme defined in 3GPP LTE release-8) may be applied for DL PHICH resource allocation for ACK/NACK transmission. The lowest index of the PRB may be the lowest index of the PRB in a frequency resource configured in the first time domain within a reception decoding interval of a cell when shifting or hopping for a transmission resource configured for contention-based transmission is applied. This may be identically applied even when the contention-based transmission resource region is configured by a contiguous or non-contiguous scheme. A DMRS CS index may be applied as a CS index explicitly or implicitly applied in corresponding UL transmission.

To further reduce the probability of generating PHICH collision, a UE which has performed contention-based UL transmission may perform blind decoding for PHICH resource allocation corresponding to all or a part of PRB indexes (e.g. in case of a non-contiguous transmission resource configuration, the lowest PRB in distinguishable resource regions) which have been used as a UL transmission resource. However, if the fact that the contention-based transmission scheme permits resource collision in transmission resources is considered, since there is a probability of generating PHICH resource collision and CS index configuration methods may be different, new PHICH resource allocation methods which will be described hereinbelow may be applied.

A DL PHICH resource may be signaled not implicitly but explicitly to UEs performing contention-based UL transmission. At this time, the corresponding PHICH resource may be designated to the UEs through UE-specific higher layer (RRC) signaling. This method may be easily applied when a cell configures and indicates application of the contention-based UL transmission scheme for any UE or UE group.

A reception error may occur due to resource collision during contention-based transmission from two or more UEs. When a basic synchronous non-adaptive HARQ is applied, if resource collision occurs during initial transmission, there is a high probability that resource collision occurs again during retransmission. To solve this problem, a retransmission time may be variably applied to the UE using the contention-based transmission scheme during HARQ retransmission, based on a synchronous HARQ Round Trip Time (RTT) of generally used X ms (where X may be, for example, 8 or 10). For instance, retransmission of contention-based transmission may be performed at a time to which a predetermined offset is applied based on a time determined to perform retransmission according to the HARQ RTT of X ms. The offset may be set as any time within a predetermined number of subframes, before, after, or before and after a time determined to perform retransmission according to the HARQ RTT. In addition, an adaptive or asynchronous HARQ process may be applied to scheduling-based UL transmission during which collision with the contention-based transmission scheme is permitted, based on a UL grant PDCCH.

Meanwhile, the contention-based UL transmission scheme may be applied to traffic transmission, such as voice transmission, which is not sensitive to errors. The contention-based UL transmission of such traffic may be bypassed without applying HARQ, or an error occurrence situation for corresponding transmission may be checked and statistically processed by applying HARQ. Alternatively, a check bit of a stamp form may be defined in a header of a corresponding packet to check whether an error occurs and the UE may apply a scheme for continuously retransmitting a packet of a buffer to UL instead of transmission to a higher layer under the assumption that there is no HARQ retransmission.

As another method, a retransmission process after error detection on ARQ may be applied to the contention-based UL transmission scheme instead of applying the HARQ retransmission process. In such retransmission, a binary exponential backoff timing may be defined and individual UEs may randomly set the backoff timing (i.e. a maximum backoff timing is defined as an exponential power of 2 and UEs randomly sets the backoff timing within the range of the defined timing) so that reoccurrence of collision can be prevented during retransmission. If the method for applying the binary exponential backoff timing hinders fast access, a backoff timing setting method for reducing time consumed for retransmission may be applied as in a retransmission timing setting method in a prescribed subframe region.

Implementation 6

The present embodiment relates to a DMRS configuration method for contention-based UL physical channel transmission.

A UL DMRS refers to a reference signal provided to estimate a UL channel so that UL data can be correctly demodulated in a cell. A DMRS sequence is configured to have orthogonality by applying CS so as to cause the cell to distinguish between UL signals from a plurality of UEs.

In contention-based UL physical channel transmission permitting resource collision, reducing or preventing collision occurrence by causing UL DMRSs from different UEs to have orthogonality is important in increasing a success probability of reception decoding.

In the scheduling-based transmission scheme, a DMRS CS index is configured through a UL grant PDCCH or a Semi-Persistent Scheduling (SPS) activation PDCCH, whereas in the contention-based UL transmission scheme, the DMRS CS index may be configured to be signaled together with a physical resource size to be used for contention-based transmission through additional RRC signaling or L1/L2 control signaling for applying the contention-based UL transmission scheme of individual UEs when such signaling is defined.

In the case where collision between scheduling-based UL transmission and contention-based UL transmission is considered, one or more CS indexes may be reserved as indexes for contention-based UL transmission on UL DMRS CS indexes and may be applied to DMRSs for contention-based transmission.

In applying the contention-based UL transmission scheme for any UE, if no configuration related signaling is defined, a UL DMRS CS index applied to corresponding contention-based UL transmission may be derived through a physical resource index used for corresponding transmission. As the physical resource index, a PRB index, a subframe index, a radio frame index, etc. may be considered. Namely, the CS index is derived through the physical resource index based on a randomly or explicitly configured relationship and the derived CS index may be used as a DMRS CS index. For example, the CS index may be derived from the lowest index of the PRB used for transmission through a randomizer or may be derived through a method using the lowest index of the PRB used for transmission as a maximum number of CS indexes.

Implementation 7

The present embodiment relates to a transmission power allocation and MCS allocation method for contention-based UL transmission.

To reduce complexity and processing latency during detection and decoding of a receiver, a method for fixing transmission parameters used for contention-based UL transmission may be applied. For example, a method for UE-specifically (or UE group-specifically) or cell-specifically fixing a modulation order (i.e. BPSK, QPSK, or 16 Quadrature Amplitude Modulation (QAM)) may be applied. In addition to fixing the modulation order, one or more methods for fixing a physical resource size used for transmission at a predetermined size or fixing an effective code rate at a predetermined value may be applied. Fixed values of the parameters (modulation order, physical resource size, effective code rate, etc.) applied to contention-based transmission may be shared by a transmitter and a receiver as predefined values without additional signaling. If configuration signaling related to a transmission resource region configuration of the contention-based transmission scheme or contention-based UL transmission of individual UEs is defined, the fixed values of the transmission parameters may be indicated to a UE (or UE group) through the above signaling.

Next, the following methods may be applied for a transmission power configuration of contention-based UL transmission.

Similar to PRACH transmission, a method for transmitting a preset fixed reference power until transmission is successful and transmitting a power which is sequentially increased by a predetermined offset during retransmission may be applied.

A mechanism (e.g. defined in 3GPP LTE release-8/9) for determining a transmission power for a specific physical channel may be applied to contention-based UL transmission. In this case, since a method for applying a transmission power based on a closed-loop Transmit Power Control (TPC) command is not suitable for contention-based UL transmission for transmitting small size data from a plurality of UEs with a short latency, a contention-based UL transmission power may be determined based on only an open-loop power control element. In terms of a cell receiving contention-based UL transmission, since not only decoding capability but also detection capability of contention-based transmission should be increased, it may be considered to apply a power offset parameter for providing a margin of a contention-based UL specific transmission power. When the power offset parameter is applied, if resource collision with scheduling-based UL transmission occurs, reception capability degradation for scheduling-based transmission may be generated due to the increased contention-based transmission power. When considering these aspects all, a UL transmission power determination scheme of legacy 3GPP LTE release-8/9 may be applied to the contention-based UL transmission scheme and a minimum transmission power (or Power Spectral Density (PSD)) threshold may be set. If a transmission power value derived according to the UL transmission power determination scheme is lower than the minimum transmission power (or PSD) threshold, the transmission power of the contention-based transmission scheme may be set as the minimum transmission power (or PSD) threshold.

Implementation 8

The present embodiment relates to a method for applying the contention-based UL transmission scheme to a multi-antenna based UE.

To mitigate the impact of resource collision appearing through application of the contention-based transmission scheme, a Multiple-Input Multiple-Output (MIMO) multi-antenna technology may be applied.

MIMO technology refers to technology for transmitting and receiving all information through a plurality of transmit antennas and a plurality of receive antennas. A weight considering a transmission channel status is applied to each of transmission information from a plurality of transmit antennas to a plurality of receive antennas and may be properly distributed to each antenna according to transmission channel status. Such a weight may be called precoding information. The direction of signals transmitted from multiple antennas can be adjusted by appropriately controlling the precoding information and this is called beamforming.

For the contention-based transmission scheme, open-loop MIMO technology such as random beamforming or opportunistic beamforming may be used to mitigate the impact of collision. To achieve beamforming, a Precoding Matrix Index (PMI) used in UL precoding is applied. As a scheme for achieving random beamforming, PMIs which can be applied with a predetermined frequency domain resource granularity may be cyclic index shifted or may be randomly selected. The predetermined frequency domain resource granularity may be the unit of a subcarrier, more than one subcarrier, a PRB, or more than one PRB. If hopping or shifting of a frequency transmission resource region is applied in the contention-based transmission scheme, the frequency granularity in which the PMI is randomly selected or cyclic index shifted may be defined as the hopped/shifted frequency resource granularity. Alternatively, in the contention-based transmission scheme to which hopping or shifting of the frequency transmission resource region is applied, the frequency granularity in which the PMI is randomly selected or cyclic index shifted may be defined as a subset of the hopped/shifted frequency resource granularity.

When considering the fact that a precoded UL DMRS is used in an LTE-A system, the same DMRS may be applied even to contention-based UL transmission. Alternatively, when considering the possibility that the frequency resource granularity in which the PMI is randomly selected or cyclic index shifted during application of random beamforming is less than a PRB and considering channel estimation capability degradation while open-loop beamforming of the DMRS is used, a non-precoded UL DMRS may be applied to the contention-based UL transmission scheme.

A scheme for achieving random beamforming by randomly selecting a PMI set or by applying cyclic index shifting in the contention-based UL transmission scheme may be defined as one UL MU-MIMO scheme or may be defined as one contention-based UL transmission scheme to which hopping or shifting for a spatial transmission resource (i.e. beam) in a spatial domain is applied.

Implementation 9

The present mode relates to methods for applying the contention-based UL transmission scheme in CA.

The method through which the contention-based UL transmission scheme proposed in the present invention is associated with a circumstance in which a plurality of UL CCs (or UE-cells) is configured has been described previously.

As one method for achieving dynamic activation/deactivation for a UL CC in CA, the contention-based UL transmission scheme may be applied. That is, when an existing SR is considered as a UE-specific UL scheduling initiation means, a method for transmitting data or control information using the contention-based UL transmission scheme in UL CCs may be applied, as a means for triggering activation for UL CCs except for a basically always configured reference UL CC (e.g. PCC (or P-cell)). In UL CCs activated by applying the contention-based UL transmission, the contention-based transmission scheme may transition to the scheduling-based transmission scheme using the various methods proposed in the present invention when a UL grant PDCCH is transmitted for a corresponding UL CC. To this end, UL CC activation may be configured to be performed with respect to UL CCs within a UL active CC set or a randomly designated candidate UL CC set. Alternatively, a cell may attempt to receive the contention-based UL transmission scheme through UL CCs always or at a scheduled time, and upon receiving contention-based UL transmission, the cell may activate corresponding UL CCs.

Meanwhile, UL CC activation may be achieved such that a corresponding UE performs contention-based UL transmission including a carrier index through a predetermined reference UL CC (e.g. PCC). A cell detecting and decoding the contention-based UL transmission in the reference UL CC may transmit a UL grant PDCCH through a DL CC linked with the UL CC indicated by the carrier index or the reference UL CC. A UL activation process may be defined by causing the UE receiving the UL grant PDCCH to transmit a physical channel (e.g. PUSCH) in the UL CC for activation. Here, the UL grant PDCCH may use a DCI format including a carrier indicator for the UL CC in which the UE is to transmit the PUSCH.

Implementation 10

The present mode relates to a contention-based DL physical channel transmission method.

If there is a large amount of machine-type communication for machine-to-machine reporting, plural small-size information should be transmitted with fast latency or in a bottleneck phenomenon of PDCCH capacity generated when there is a large number of activated UEs, various methods for the above-described contention-based UL transmission scheme applied to DL transmission may be considered. When considering duality or reciprocity of UL transmission and DL transmission, various embodiments of DL contention-based transmission may be configured by changing UL to DL, UL grant PDCCH to DL channel allocation PDCCH, UL CC to DL CC, PUSCH to PDSCH, PUCCH to PDCCH, cell to UE, and UE to cell, in the above-described various proposals of the present invention. In other words, the present invention includes the contention-based DL transmission scheme and configuration/release methods therefor, and they have the substantially same principle as the detailed methods of the contention-based UL transmission scheme.

For example, in the contention-based DL transmission scheme, a transmission entity (e.g. a cell) determines a resource region for contention-based transmission permitting collision with other DL transmission and transmits DL data and/or control information in the determined resource region to one or more UEs. The resource region for contention-based DL transmission may be hopped in at least one of a time resource, a frequency resource, a code resource, and a spatial resource. The impact of collision of contention-based DL transmission may be mitigated through hopping in a physical resource.

The resource region for contention-based DL transmission may be multiplexed by an FDM, TDM, or FDM/TDM scheme. The resource region for contention-based DL transmission may be defined as a predetermined resource region so that a cell need not separately inform UEs, or the cell may signal allocation of the resource region to UEs. Moreover, the resource region for contention-based DL transmission may be configured as a resource region which distinguishes from a resource region for scheduling-based DL transmission (PDSCH transmission in a scheduled resource using a DL channel allocation PDCCH) or as a resource region which overlaps therewith. Further, the resource region for contention-based DL transmission may be configured as a contiguous or non-contiguous resource region in a time/frequency resource. Although contention-based DL transmission may be performed at an arbitrary time, it may be temporarily performed before scheduling-based transmission is performed.

Retransmission of contention-based DL transmission may be performed at a time when an offset is applied based on a retransmission time according to a synchronous HARQ RTT, thereby mitigating a collision possibility during retransmission. As a transmission parameter for contention-based DL transmission, a fixed value may be used so that the UE can easily receive contention-based DL transmission without additional scheduling. In case of multi-antenna transmission, contention-based DL transmission may be performed by a random beamforming scheme. In case of multi-carrier transmission, contention-based DL transmission may indicate carrier activation.

Methods which can be additionally considered for contention-based DL transmission are as follows.

Since DL transmission has a property of single point-to-multi point transmission, if resource collision occurs, the cell has already been aware of resources in which collision occurs at a transmission point. Accordingly, collision can be avoided by applying pre-processing in a physical resource in which resource collision occurs. Puncturing may be considered as the most basic scheme. Puncturing may be expressed as configuration of null transmission. Partial puncturing considering a constellation status of a symbol which is a collision target in resources in which collision occurs may also be applied. Partial puncturing may mean energy puncturing on, for example, an I (real number) axis or a Q (imaginary number) axis.

In the DL contention-based transmission scheme, a channel-independent physical resource and a transmission mode are basic configurations. Although contention-based DL transmission may be transiently used, it may be persistently used. To effectively support this, a transmission resource configuration and a transmission mode configuration including a transmission MCS may be changed in the long term, and this change may be signaled to the UE through RRC signaling or L1/L2 control signaling (e.g. DL channel allocation PDCCH). In this case, although channel measurement may be fed back from the UE in the same manner as the case of applying a normal scheduling-based DL transmission scheme, an additional feedback process or feedback mode which is more effective for relatively long-term adaptation demanded in the contention-based DL transmission scheme may be configured.

Fig. 21 is a diagram explaining a contention-based transmission method according to an embodiment of the present invention.

A transmission entity who performs the contention-based transmission method shown in Fig. 21 may be a UE in case of UL transmission or may be a BS in case of DL transmission. Alternatively, a transmission entity who performs the contention-based transmission method shown in Fig. 21 may be an RN (backhaul UL transmission or access DL transmission). Hereinafter, in most cases, the term transmission entity will be used for convenience of description, and the transmission entity means one of the UE, BS, and RN. A reception entity of contention-based transmission may be a BS or an RN in case of UL transmission and may be a UE or an RN in case of DL transmission.

In step S2110, the transmission entity may be in an RRC connected state with the reception entity through an initial access process.

In step S2120, the transmission entity may determine a resource region for contention-based transmission. Since contention-based transmission permits collision with other transmission, collision between contention-based transmissions may be mitigated and collision between contention-based transmission and scheduling-based transmission may be more mitigated, by hopping a contention-based transmission resource region in a physical resource. The physical resource region may be at least one of a time resource, a frequency resource, a code resource, and a spatial resource. For example, a hopping granularity of the resource region for contention-based transmission in the physical resource may be defined as a granularity less than one subframe in the time resource. The resource region for contention-based DL transmission may be multiplexed by an FDM, TDM, or FDM/TDM scheme in the physical resource. Moreover, the resource region for contention-based transmission may be configured as a resource region which distinguishes from a resource region for scheduling-based transmission or as a resource region which overlaps therewith. Alternatively, the resource region for contention-based transmission may be configured as a contiguous or non-contiguous resource region in a time/frequency resource. The contention-based resource region may be determined as a resource region predetermined between the transmission entity and the reception entity without additional indication, or a scheduler (of a cell) may signal allocation of the contention-based resource region to the UEs or RNs.

In step S2130, the transmission entity may transmit at least one of data and control information in the contention-based transmission resource region determined step S2120. Such a contention-based transmission operation may be performed at a random time or may be transiently performed before scheduling-based transmission is performed. Retransmission of contention-based transmission may be performed at a time when an offset is applied based on a retransmission time according to a synchronous HARQ RTT, thereby mitigating a collision possibility during retransmission. A transmission parameter for contention-based transmission may use a fixed value so that the reception entity can easily receive contention-based transmission. A DMRS CS index for estimating a channel for demodulation of contention-based transmission may be determined from an index of a physical resource in which contention-based transmission is allocated. In case of multi-antenna transmission, contention-based transmission may be performed by a random beamforming scheme. In case of multi-carrier transmission, contention-based transmission may indicate carrier activation.

The contention-based transmission method according to the embodiment of the present invention described with reference to Fig. 21 has been explained in brief for clarity of description in terms of operation of the transmission entity and the reception entity. However, the present invention is not limited thereto and it is apparent that the various methods described may be identically applied thereto as details and additional embodiments.

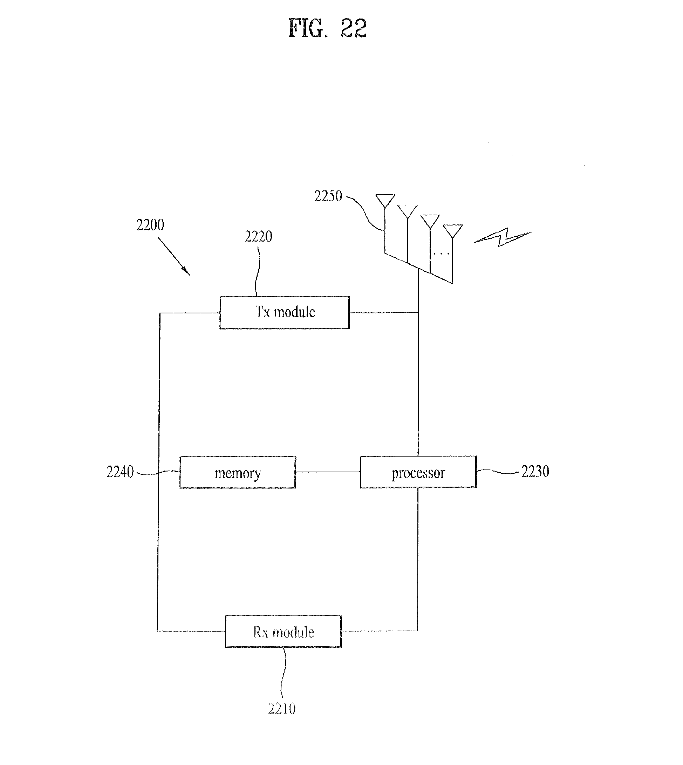

Fig. 22 is a diagram showing the configuration of an exemplary embodiment of a UE, an RN, or an eNB according to the present invention. Although the same reference number is used to indicate the UE, RN, or eNB, this does not mean that each device has the same configuration. In other words, the following description relates to a separate configuration of each of the UE, RN, and eNB.

A UE 2200 may include a reception (Rx) module 2210, a transmission (Tx) module 2220, a processor 2230, and a memory 2240. The Rx module 2210 may receive various signals, data, and information from an eNB etc. The Tx module 1220 may transmit various signals, data, and information to the eNB etc. The processor 2230 may control an overall operation of the UE 2200 including the Rx module 2210, the Tx module 2220, the memory 2240, and an antenna 2250. The antenna 2250 may consist of a plurality of antennas.

The processor 2230 of the UE configures an RRC connection with a reception entity (eNB or RN) receiving contention-based UL transmission, determines a resource region for contention-based UL transmission permitting collision with other UL transmission, and transmits at least one of UL data and control information to the Tx module 2120 in a determined resource region.

The description of the various embodiments of the present invention may be identically applied to details of the UE 2200, especially related to configuration of the contention-based UL transmission resource region in the processor 2230.

The processor 2230 performs an operational processing function upon information received by the UE and information to be transmitted to the exterior. The memory 2240 may store the operationally processed information for a predetermined time and may be replaced with a constituent element such as a buffer (not shown).

Meanwhile, an RN 2200 may include an Rx module 2210, a Tx module 2220, a processor 2230, and a memory 2240. The Rx module 2210 may receive various signals, data and information on backhaul DL from the eNB etc. and receive various signals, data and information on access UL from the UE etc. The Tx module 1220 may transmit various signals, data, and information on backhaul UL to the eNB etc. and transmit various signals, data, and information on access DL to the UE etc. The processor 2230 may control an overall operation of the RN 2200 including the Rx module 2210, the Tx module 2220, the memory 2240, and an antenna 2250. The antenna 2250 may consist of a plurality of antennas.

The processor 2230 of the RN configures an RRC connection with a reception entity (eNB in case of UL and UE in case of DL) receiving contention-based UL/DL transmission, determines a resource region for contention-based UL/DL transmission permitting collision with other UL transmission, and transmits at least one of UL/DL data and control information to the Tx module 2120 on the determined resource region.

The description of the various embodiments of the present invention may be identically applied to details of the RN 2200, especially related to configuration of the contention-based UL/DL transmission resource region in the processor 2230.

The processor 2230 of the RN performs an operational processing function upon information received by the RN and information to be transmitted to the exterior. The memory 2240 may store the operationally processed information for a predetermined time and may be replaced with a constituent element such as a buffer (not shown).

Meanwhile, an eNB 2200 may include an Rx module 2210, a Tx module 2220, a processor 2230, and a memory 2240. The Rx module 2210 may receive various signals, data and information from a UE etc. The Tx module 1220 may transmit various signals, data, and information to the UE etc. The processor 2230 may control an overall operation of the eNB 2200 including the Rx module 2210, the Tx module 2220, the memory 2240, and an antenna 2250. The antenna 2250 may consist of a plurality of antennas.

The processor 2230 of the eNB configures an RRC connection with a reception entity (RN or UE) receiving contention-based DL transmission, determines a resource region for contention-based DL transmission permitting collision with other DL transmission, and transmits at least one of DL data and control information to the Tx module 2120 on the determined resource region.

The description of the various embodiments of the present invention may be identically applied to details of the eNB 2200, especially related to configuration of the contention-based UL transmission resource region in the processor 2230.

The processor 2230 of the eNB performs an operational processing function upon information received by the eNB and information to be transmitted to the exterior. The memory 2240 may store the operationally processed information for a predetermined time and may be replaced with a constituent element such as a buffer (not shown).

The embodiments of the present invention may be achieved by various means, for example, hardware, firmware, software, or a combination thereof.

In a hardware configuration, the embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present invention may be achieved by a module, a procedure, a function, etc. performing the above-described functions or operations. Software code may be stored in a memory unit and executed by a processor. The memory unit is located at the interior or exterior of the processor and may transmit data to and receive data from the processor via a variety of well-known means.

The detailed description of the exemplary embodiments of the present invention has been given to enable those skilled in the art to implement and practice the invention. Although the invention has been described with reference to the exemplary embodiments, those skilled in the art will appreciate that various modifications and variations can be made in the present invention without departing from the spirit or scope of the invention described in the appended claims. For example, those skilled in the art may use each construction described in the above embodiments in combination with each other. Accordingly, the invention should not be limited to the specific embodiments described herein, but should be accorded the broadest scope consistent with the principles and novel features disclosed herein.

The present invention may be carried out in other specific ways than those set forth herein without departing from the spirit and essential characteristics of the present invention. The above exemplary embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. Also, it will be obvious to those skilled in the art that claims that are not explicitly cited in the appended claims may be presented in combination as an exemplary embodiment of the present invention or included as a new claim by subsequent amendment after the application is filed.

### INDUSTRIAL APPLICABILITY

The above-described embodiments of the present invention may be applied to various mobile communication systems.

## Claims

1. A method for performing contention-based transmission in a wireless communication system, comprising:
configuring a Radio Resource Control (RRC) connection with a receiver for receiving the contention-based transmission;
determining a resource region for the contention-based transmission which permits collision with other transmission; and
transmitting at least one of data and control information on the resource region,
wherein the resource region for the contention-based transmission is hopped on a physical resource.

2. The method of claim 1, wherein the physical resource is at least one of a time resource, a frequency resource, a code resource, and a spatial resource.

3. The method of claim 1, wherein the resource region for the contention-based transmission is multiplexed in the physical resource by applying at least one of a Time Division Multiplexing (TDM) scheme and a Frequency Division Multiplexing (FDM) scheme.

4. The method of claim 1, wherein the resource region for the contention-based transmission is defined as a predetermined resource region or is determined based on signaling from a cell.

5. The method of claim 1, wherein the resource region for the contention-based transmission is configured as a resource region which distinguishes from or overlaps with a resource region for scheduling-based transmission.

6. The method of claim 1, wherein the resource region for the contention-based transmission is configured as a contiguous or non-contiguous resource region.

7. The method of claim 1, wherein a hopping granularity of the resource region for the contention-based transmission in the physical resource is defined as a granularity less than one subframe in a time resource.

8. The method of claim 1, wherein the contention-based transmission is temporarily performed before scheduling-based transmission is performed.

9. The method of claim 1, wherein retransmission of the contention-based transmission is transmitted at a timing when an offset is applied based on a retransmission timing according to a synchronous Hybrid Automatic Repeat Request (HARQ) Round Trip Time (RTT).

10. The method of claim 1, wherein a cyclic shift index of a demodulation reference signal for the contention-based transmission is determined from an index of the physical resource.

11. The method of claim 1, wherein a transmission parameter for the contention-based transmission uses a fixed value.

12. The method of claim 1, wherein the contention-based transmission in multi-antenna transmission is performed by a random beamforming scheme.

13. The method of claim 1, wherein the contention-based transmission in multi-carrier transmission triggers carrier activation.

14. A user equipment for performing contention-based transmission in a wireless communication system, comprising:
a reception module for receiving downlink signals from a base station;
a transmission module for transmitting uplink signals to the base station; and
a processor for controlling the user equipment including the reception module and the transmission module,
wherein the processor is configured to
configure a Radio Resource Control (RRC) connection with the base station receiving the contention-based transmission;
determine a resource region for the contention-based transmission which permits collision with other transmission; and
transmit at least one of uplink data and control information in the resource region, and
wherein the resource region for the contention-based transmission is hopped in a physical resource.

15. A base station for performing contention-based transmission in a wireless communication system, comprising:
a reception module for receiving uplink signals from one or more user equipments;
a transmission module for transmitting downlink signals to the one or more user equipments; and
a processor for controlling the base station including the reception module and the transmission module,
wherein the processor is configured to
configure a Radio Resource Control (RRC) connection with the one or more user equipments receiving the contention-based transmission;
determine a resource region for the contention-based transmission which permits collision with other transmission; and
transmit at least one of downlink data and control information in the resource region, and
wherein the resource region for the contention-based transmission is hopped in a physical resource.
